# EUROPEAN PATENT APPLICATION

(11) **EP 4 560 876 A2**
(43) Date of publication of application: **28.05.2025**
(21) Application number: 24215180.1
(22) Date of filing: 25.11.2024
(51) Int. Cl.: H02J 7/00, B60L 53/22, H02J 7/02

(54) **CHARGING CONNECTION APPARATUS AND CHARGING SYSTEM**

(30) Priority: 27.11.2023 CN 202311613792
(71) Applicant: Huawei Digital Power Technologies Co., Ltd., Shenzhen, Guangdong 518043 (CN)
(72) Inventor: YIN, Boyuan, Shenzhen 518043 (CN); HAN, Xinru, Shenzhen 518043 (CN); DENG, Ziming, Shenzhen 518043 (CN); LI, Xiangsong, Shenzhen 518043 (CN); MA, Cheng, Shenzhen 518043 (CN)
(74) Representative: Gill Jennings & Every LLP

(57) **Abstract**

Embodiments of this application provide a charging connection apparatus and a charging system. The charging connection apparatus includes a plurality of direct current ports and a switch module. A first direct current port and a second direct current port in the plurality of direct current ports each are connected to a direct current bus of one charging device, and the direct current bus of each of the charging devices is configured to converge direct currents output by a plurality of power conversion apparatuses of the charging device. The first direct current port and the second direct current port are connected to each other via the switch module, to perform power transmission between the direct current bus of the one charging device connected to the first direct current port and the direct current bus of the other charging device connected to the second direct current port, so as to flexibly adjust entire maximum output power of each charging device connected to the charging connection apparatus, so as to meet different requirements of different charging scenarios for entire maximum output power of the charging device.

## Description

### TECHNICAL FIELD

This application relates to the field of charging device technologies, and more specifically, to a charging connection apparatus and a charging system.

### BACKGROUND

With rapid popularization of new energy vehicles, electric vehicle charging devices used as auxiliary facilities are increasingly widely used. In a current actual application, different charging scenarios generally have different requirements for entire maximum output power of charging devices. For example, in a high-power charging station scenario, as users have increasingly high requirements for charging time, required entire maximum output power of the charging device increases accordingly. In a low-power charging station scenario, to meet low-power charging requirements of electric vehicles of common vehicle models, required entire maximum output power of the charging device is generally low.

However, existing charging devices mostly have fixed entire maximum output power. This cannot better meet the different requirements of the different charging scenarios for the entire maximum output power of the charging devices.

### SUMMARY

This application provides a charging connection apparatus and a charging system, so that power transmission between direct current buses of a plurality of charging devices can be performed via the charging connection apparatus, to flexibly adjust entire maximum output power of each charging device, so as to meet different requirements of different charging scenarios for entire maximum output power of the charging device.

According to a first aspect, a charging connection apparatus is provided. The charging connection apparatus includes a plurality of direct current ports and a switch module. The plurality of direct current ports include a first direct current port and a second direct current port. The first direct current port is configured to connect to a direct current bus of one charging device, the second direct current port is configured to connect to a direct current bus of another charging device, and the direct current bus of each of the charging devices is configured to converge a direct current output by a power conversion apparatus of thecharging device, and the first direct current port and the second direct current port are connected to each other via the switch module, to perform power transmission between the direct current bus of the one charging device connected to the first direct current port and the direct current bus of the another charging device connected to the second direct current port. The switch module is configured to disconnect or connect a connection between the first direct current port and the second direct current port.

It may be understood that, in this embodiment of this application, the first direct current port and the second direct current port may be any two direct current ports that are in the plurality of direct current ports of the charging connection apparatus and that are configured to connect to direct current buses of different charging devices.

In this embodiment of this application, the plurality of direct current ports of the charging connection apparatus include the first direct current port and the second direct current port that are configured to connect to direct current buses of different charging devices, and the first direct current port and the second direct current port are connected to each other via the switch module, so that the direct current buses of the different charging devices can be interconnected via the charging connection apparatus. Further, a direct current bus of any charging device connected to the charging connection apparatus can invoke, via the charging connection apparatus, power converged by a direct current bus of another charging device, to flexibly adjust entire maximum output power of the any charging device, so as to meet different requirements of different charging scenarios for the entire maximum output power of the any charging device.

In addition, the charging device can invoke, via the charging connection apparatus, the power converged by the direct current bus of the another charging device. Therefore, this helps implement a low-power design of the charging device, thereby helping reduce production costs of the charging device, reduce a size of the charging device, and facilitate transportation and mounting of the charging device.

With reference to the first aspect, in some implementations of the first aspect, when the first direct current port is connected to the direct current bus of the one charging device, and the second direct current port is connected to the direct current bus of the another charging device, in response to that a voltage difference between the first direct current port and the second direct current port is less than or equal to a preset voltage difference, the switch module is configured to connect the connection between the first direct current port and the second direct current port; or in response to that a voltage difference between the first direct current port and the second direct current port is greater than a preset voltage difference, the switch module is configured to disconnect the connection between the first direct current port and the second direct current port.

It may be understood that when the first direct current port is connected to the direct current bus of the one charging device, and the second direct current port is connected to the direct current bus of the another charging device, voltage values of the first direct current port and the second direct current port are voltage values of direct current buses of charging devices respectively connected to the first direct current port and the second direct current port, and the voltage difference between the first direct current port and the second direct current port is a voltage difference between the direct current buses of the charging devices respectively connected to the first direct current port and the second direct current port.

It may be further understood that, that the voltage difference between the first direct current port and the second direct current port is less than or equal to the preset voltage difference may be understood as that the voltage values of the direct current buses of the charging devices respectively connected to the first direct current port and the second direct current port are basically consistent, and that the voltage difference between the first direct current port and the second direct current port is greater than the preset voltage difference may be understood as that the voltage values of the direct current buses of the charging devices respectively connected to the first direct current port and the second direct current port differ greatly.

In this embodiment of this application, when the voltage values of the direct current buses of the charging devices respectively connected to the first direct current port and the second direct current port are basically consistent, the switch module connects the connection between the first direct current port and the second direct current port, so that a voltage value of power transmitted, via the charging connection apparatus, by one of the two charging devices respectively connected to the first direct current port and the second direct current port to the direct current bus of the other one can be basically consistent with the voltage value of the direct current bus of the other one. Further, this helps ensure normal operation of power transmission between the direct current buses of the two charging devices via the charging connection apparatus, and improve security of invoking power between the direct current buses of the two charging devices via the charging connection apparatus.

With reference to the first aspect, in some implementations of the first aspect, the charging connection apparatus further includes a direct current-direct current DC-DC conversion circuit and a controller. The DC-DC conversion circuit is connected in series between the first direct current port and the switch module. The controller is configured to: when the first direct current port is connected to the direct current bus of the one charging device, and the second direct current port is connected to the direct current bus of the another charging device, in response to that the voltage difference between the first direct current port and the second direct current port is greater than the preset voltage difference, send a drive signal to the DC-DC conversion circuit, and control the switch module to connect the connection between the first direct current port and the second direct current port. The drive signal indicates the DC-DC conversion circuit to perform power conversion on a voltage received by the first direct current port and then output a voltage obtained through the conversion to the second direct current port, so that a difference between an output voltage value obtained through the conversion and a voltage value of the second direct current port is less than or equal to the preset voltage difference. Alternatively, the drive signal indicates the DC-DC conversion circuit to perform power conversion on a voltage received by the second direct current port and then output a voltage obtained through the conversion to the first direct current port, so that a difference between an output voltage value obtained through the conversion and a voltage value of the first direct current port is less than or equal to the preset voltage difference.

It should be noted that, in this embodiment of this application, the controller of the charging connection apparatus may also be referred to as a charging connection apparatus controller.

In this embodiment of this application, the DC-DC conversion circuit is disposed between the first direct current port and the second direct current port of the charging connection apparatus, so that a voltage value transmitted between the first direct current port and the second direct current port can be flexibly adjusted. Further, when power transmission between direct current buses of two charging devices is performed through the first direct current port and the second direct current port that are connected to each other, if voltage values of the direct current buses of the two charging devices differ greatly, the DC-DC conversion circuit may perform power conversion on a voltage transmitted by the direct current bus of one charging device, and then transmit a voltage obtained through the conversion to the direct current bus of the other charging device, so that a transmitted voltage value obtained through the conversion is basically consistent with a voltage value of the direct current bus of the other charging device. This helps ensure normal operation and security of power transmission between the direct current buses of the two charging devices via the charging connection apparatus.

With reference to the first aspect, in some implementations of the first aspect, the charging connection apparatus further includes a voltage detection circuit. The voltage detection circuit is configured to detect a voltage value of each direct current port. The controller is further configured to: when the first direct current port is connected to the direct current bus of the one charging device, and the second direct current port is connected to the direct current bus of the another charging device, control the voltage detection circuit to detect the voltage values of the first direct current port and the second direct current port; and determine the voltage difference between the first direct current port and the second direct current port based on the voltage values that are of the first direct current port and the second direct current port and that are detected by the voltage detection circuit.

In this embodiment of this application, the voltage value of each direct current port of the charging connection apparatus can be detected by the voltage detection circuit. Further, in an actual application, the voltage difference between the first direct current port and the second direct current port may be determined based on voltage values detected by the voltage detection circuit, that is, the voltage difference between the direct current buses of the charging devices respectively connected to the first direct current port and the second direct current port may be determined. In addition, when the charging connection apparatus operates, the voltage value of each direct current port may be detected in real time by the voltage detection circuit. Therefore, when the voltage detection circuit detects that a voltage value of a direct current port is abnormal, for example, the voltage value of the direct current port is excessively high or low, the switch module may be controlled to disconnect a connection between the direct current port and another direct current port, to implement fault isolation, so as to help ensure normal operation of the another direct current port of the charging connection apparatus and a charging device connected to the another direct current port.

With reference to the first aspect, in some implementations of the first aspect, the charging connection apparatus further includes a direct current positive wire, a direct current negative wire, and a current detection circuit. The first direct current port and the second direct current port are connected to each other through the direct current positive wire and the direct current negative wire, and the current detection circuit is connected to the direct current positive wire or the direct current negative wire between the first direct current port and the second direct current port. The current detection circuit is configured to detect a current value of a direct current transmitted on the direct current positive wire or the direct current negative wire between the first direct current port and the second direct current port. When the first direct current port is connected to the direct current bus of the one charging device, and the second direct current port is connected to the direct current bus of the another charging device, in response to that the current value of the direct current is less than or equal to a preset DC current value, the switch module is configured to disconnect the connection between the first direct current port and the second direct current port.

In this embodiment of this application, the current detection circuit can detect, in real time, the current value of the direct current transmitted between the first direct current port and the second direct current port in the charging connection apparatus, so that the charging connection apparatus can disconnect the connection between the first direct current port and the second direct current port when a detected current value is abnormal, to implement fault isolation, so as to help ensure normal operation of another direct current port of the charging connection apparatus and a charging device connected to the another direct current port.

With reference to the first aspect, in some implementations of the first aspect, the charging connection apparatus further includes a leakage current detection circuit. The leakage current detection circuit is connected to the direct current positive wire and the direct current negative wire that are between the first direct current port and the second direct current port. The leakage detection circuit is configured to detect a current value of a leakage current transmitted on the direct current positive wire and the direct current negative wire that are between the first direct current port and the second direct current port. When the first direct current port is connected to the direct current bus of the one charging device, and the second direct current port is connected to the direct current bus of the another charging device, in response to that the current value of the leakage current is greater than a preset leakage current value, the switch module is configured to disconnect the connection between the first direct current port and the second direct current port.

It may be understood that the current value of the leakage current may be a vector sum between a positive current value transmitted on the direct current positive wire DC+ and a negative current value transmitted on the direct current negative wire DC-.

In this embodiment of this application, the charging connection apparatus may detect a current value of a leakage current on a transmission line between the first direct current port and the second direct current port in real time by the leakage current detection circuit, and disconnect the connection between the any two direct current ports when the detected current value of the leakage current is greater than the preset leakage current value, to implement earth leakage protection.

With reference to the first aspect, in some implementations of the first aspect, the plurality of direct current ports further include at least one of a third direct current port and a fourth direct current port. The third direct current port is configured to connect to an energy storage device, and the fourth direct current port is configured to connect to a photovoltaic device, to perform power transmission between any two of the direct current bus of the one charging device, the direct current bus of the another charging device, the energy storage device, and the photovoltaic device.

It may be understood that, in this embodiment of this application, the third direct current port may be a direct current port that is in the plurality of direct current ports of the charging connection apparatus and that is configured to connect to the energy storage device, and the fourth direct current port may be a direct current port that is in the plurality of direct current ports of the charging connection apparatus and that is configured to connect to the photovoltaic device.

It may be further understood that, in this embodiment of this application, any two of the plurality of direct current ports of the charging connection apparatus are connected to the switch module. In other words, any two of the first direct current port, the second direct current port, the third direct current port, and the fourth direct current port are connected to each other via the switch module, so that power transmission can be performed between any two of the direct current bus of the one charging device, the direct current bus of the another charging device, the energy storage device, and the photovoltaic device.

In this embodiment of this application, the plurality of direct current ports of the charging connection apparatus not only include the first direct current port and the second direct current port that are configured to connect to direct current buses of different charging devices, but also include the third direct current port configured to connect to the energy storage device and/or the fourth direct current port configured to connect to the photovoltaic device, so that any two of the energy storage device, the photovoltaic device, and the direct current buses of the different charging devices are interconnected via the charging connection apparatus. Further, a direct current bus of any charging device connected to the charging connection apparatus can invoke, via the charging connection apparatus, power converged by a direct current bus of another charging device, and can also invoke, via the charging connection apparatus, power output by the energy storage device and/or the photovoltaic device. In this way, entire maximum output power of the any charging device can be flexibly adjusted, to meet different requirements of different charging scenarios for the entire maximum output power of the charging device, and PV and ESS deployment on a direct current bus side of the any charging device can be implemented, to provide richer electric energy for an electric vehicle. In addition, this increases utilization of green resources such as PV energy and stored energy.

According to a second aspect, a charging system is provided. The charging system includes a plurality of charging devices and a charging connection apparatus. Each charging device includes a power conversion apparatus, a direct current bus, and a direct current-direct current DC-DC conversion apparatus. The power conversion apparatus is connected to an input end of the DC-DC conversion apparatus through the direct current bus, and an output end of the DC-DC conversion apparatus is configured to connect to an electric vehicle. The power conversion apparatus is configured to output a direct current to the direct current bus, and the DC-DC conversion apparatus is configured to: receive the direct current through the direct current bus, perform power conversion on the direct current, and then output a direct current obtained through the conversion to the electric vehicle. The charging connection apparatus includes a plurality of direct current ports and a switch module. The plurality of direct current ports include a first direct current port and a second direct current port. The first direct current port is connected to a direct current bus of one charging device, the second direct current port is connected to a direct current bus of another charging device, and the first direct current port and the second direct current port are connected to each other via the switch module, to perform power transmission between the direct current bus of the one charging device and the direct current bus of the another charging device. The switch module is configured to disconnect or connect a connection between the first direct current port and the second direct current port.

It may be further understood that, in this embodiment of this application, direct current buses of any two charging devices in the charging system are respectively connected to the first direct current port and the second direct current port, that is, the direct current buses of the any two charging devices in the charging system are interconnected through the first direct current port and the second direct current port.

In this embodiment of this application, the direct current buses of the any two charging devices in the charging system can be interconnected via the charging connection apparatus, so that any charging device in the charging system can invoke, via the charging connection apparatus, power converged by a direct current bus of another charging device, to flexibly adjust entire maximum output power of the any charging device, so as to meet different requirements of different charging scenarios for entire maximum output power of the charging device. In addition, invoking, by the any charging device, the power converged by the direct current bus of the another charging device does not affect charging, by the another charging device, an electric vehicle through a charging connector. Therefore, this helps improve system power utilization of the charging system and flexibility of allocating power by the charging system.

In addition, because the any charging device in the charging system invokes, via the charging connection apparatus, power converged to a direct current bus of another charging device, each charging device in the charging system may be designed based on low power. In an actual application, depending on a specific charging scenario, the charging device may meet a requirement for low entire maximum output power in an independent operation manner, or meet a requirement for high entire maximum output power in a manner of invoking power converged by a direct current bus of another charging device. Compared with a charging device designed based on high power, a low-power charging device is more conducive to reducing production costs of the charging device, reducing a size of the charging device, and facilitating transportation and mounting of the charging device.

With reference to the second aspect, in some implementations of the second aspect, the charging system further includes at least one of an energy storage device and a photovoltaic device, and the plurality of direct current ports further include at least one of a third direct current port and a fourth direct current port. The third direct current port is connected to the energy storage device, and the fourth direct current port is connected to the photovoltaic device, to perform power transmission between any two of the direct current bus of the one charging device, the direct current bus of the another charging device, the energy storage device, and the photovoltaic device.

In this embodiment of this application, the direct current bus of each charging device in the charging system can be interconnected to the direct current bus of another charging device via the charging connection apparatus, and can also be interconnected to the energy storage device and/or the photovoltaic device via the charging connection apparatus. Therefore, any charging device in the charging system can invoke, via the charging connection apparatus, power converged by a direct current bus of another charging device, and can also invoke, via the charging connection apparatus, power output by the energy storage device and/or the photovoltaic device. In this way, entire maximum output power of the any charging device can be flexibly adjusted, to meet different requirements of different charging scenarios for the entire maximum output power of the charging device, and PV and ESS deployment on a direct current bus side of the any charging device can be implemented, to provide richer electric energy for an electric vehicle. In addition, this increases utilization of green resources such as PV energy and stored energy.

In addition, compared with PV and ESS deployment on an alternating current bus side, the PV and ESS deployment on the direct current bus side does not need to perform direct current-alternating current inversion on direct currents output by the energy storage device and the photovoltaic device. Therefore, this helps increase energy utilization of the energy storage device and the photovoltaic device and power conversion efficiency of charging the electric vehicle by the charging system. In addition, the direct current bus of the any charging device in the charging system is interconnected to the direct current bus of the another charging device, the energy storage device, and/or the photovoltaic device via the charging connection apparatus, so that a plurality of power transmission paths in the charging system can be implemented, and free and efficient flow of energy between mains, PV energy, and stored energy in the charging system is implemented.

With reference to the second aspect, in some implementations of the second aspect, the charging system further includes a system controller, and the system controller is configured to: when the one charging device charges the electric vehicle, in response to that maximum power output by the direct current bus of the one charging device to a DC-DC conversion apparatus of the one charging device is less than required output power of the DC-DC conversion apparatus of the one charging device and a grid electricity price is at a valley electricity price, preferentially control the direct current bus of the another charging device to transmit power to the direct current bus of the one charging device via the charging connection apparatus.

It may be understood that, that the maximum power output by the direct current bus of the one charging device to the DC-DC conversion apparatus is less than the required output power of the DC-DC conversion apparatus of the one charging device may mean that entire maximum output power of the charging device does not meet entire maximum output power required for charging the electric vehicle.

In this embodiment of this application, when the one charging device charges the electric vehicle, in a case in which the grid electricity price is at the valley electricity price, compared with that power of the energy storage device and/or the photovoltaic device connected to the charging connection apparatus is scheduled, the direct current bus of the another charging device connected to the charging connection apparatus is preferentially scheduled to transmit power to the direct current bus of the one charging device, so that not only the entire maximum output power of the one charging device can be increased, to meet the entire maximum output power required for charging the electric vehicle, but also use of electric energy stored in the energy storage device can be reduced. Therefore, the energy storage device can provide more electric energy for the plurality of charging devices in the charging system when the grid electricity price is at a peak electricity price, to reduce an amount of peak electricity received by the plurality of charging devices from a power grid, and reduce costs of charging electric vehicles by the plurality of charging devices.

With reference to the second aspect, in some implementations of the second aspect, the system controller is further configured to: when the charging system includes the energy storage device, in response to that remaining electric energy of the energy storage device is less than preset remaining electric energy, control the direct current bus of the another charging device to transmit power to the energy storage device via the charging connection apparatus.

In this embodiment of this application, when the grid electricity price is at the valley electricity price, if the remaining electric energy of the energy storage device is low, the another charging device may be scheduled to transmit received valley electricity with a lower electricity price to the energy storage device via the charging connection apparatus, to charge the energy storage device. The energy storage device can provide more electric energy for the plurality of charging devices when the grid electricity price is at the peak electricity price, to reduce an amount of peak electricity received by the plurality of charging devices from the power grid, and reduce costs of charging the electric vehicles by the plurality of charging devices.

With reference to the second aspect, in some implementations of the second aspect, the system controller is further configured to: when the one charging device charges the electric vehicle, in response to that the maximum power output by the direct current bus of the one charging device to the DC-DC conversion apparatus of the one charging device is less than the required output power and the grid electricity price is not at the valley electricity price, preferentially control at least one of the energy storage device and the photovoltaic device to transmit power to the direct current bus of the one charging device via the charging connection apparatus.

In this embodiment of this application, when the one charging device charges the electric vehicle, in a case in which the grid electricity price is not at the valley electricity price, for example, the grid electricity price is at a normal electricity price or a peak electricity price, compared with that power of the another charging device connected to the charging connection apparatus is scheduled, the energy storage device and/or the photovoltaic device connected to the charging connection apparatus are/is preferentially scheduled to transmit power to the direct current bus of the one charging device, so that not only entire maximum output power of the direct current bus of the one charging device can be increased, to meet entire maximum output power required for charging the electric vehicle, but also an amount of peak electricity or normal electricity with a higher electricity price received by the charging system from the power grid can be reduced, to reduce costs of charging the electric vehicle.

With reference to the second aspect, in some implementations of the second aspect, that the system controller is further configured to preferentially control at least one of the energy storage device and the photovoltaic device to transmit power to the direct current bus of the one charging device via the charging connection apparatus includes: preferentially controlling at least one of the energy storage device and the photovoltaic device to transmit the power to the direct current bus of the one charging device via the charging connection apparatus; and in response to that maximum power converged to the direct current bus of the one charging device is less than the required output power, controlling the direct current bus of the another charging device to transmit the power to the direct current bus of the one charging device via the charging connection apparatus.

It may be understood that the maximum power converged to the direct current bus of the one charging device may be a sum of maximum power output to the direct current bus by the power conversion apparatus of the one charging device and maximum power converged to the direct current bus by the energy storage device and/or the photovoltaic device.

In this embodiment of this application, when the sum of the maximum power output to the direct current bus by the power conversion apparatus of the one charging device and the maximum power converged to the direct current bus of the one charging device by the energy storage device and/or the photovoltaic device still cannot meet the entire maximum output power required for charging the electric vehicle, the direct current bus of the another charging device connected to the charging connection apparatus is further scheduled to transmit power to the direct current bus of the one charging device, so that the entire maximum output power of the one charging device can be further improved, to help meet the entire maximum output power required for charging the electric vehicle.

According to a third aspect, a charging system is provided. The charging system includes a charging connection apparatus, a charging device, and an energy storage device. The charging device includes a power conversion apparatus, a direct current bus, and a direct current-direct current DC-DC conversion apparatus. The power conversion apparatus is connected to an input end of the DC-DC conversion apparatus through the direct current bus, and an output end of the DC-DC conversion apparatus is configured to connect to an electric vehicle. The power conversion apparatus is configured to transmit a direct current to the direct current bus, and the DC-DC conversion apparatus is configured to: receive the direct current through the direct current bus, perform power conversion on the direct current, and then output a direct current obtained through the conversion to the electric vehicle. The charging connection apparatus includes a plurality of direct current ports and a switch module. The plurality of direct current ports include a first direct current port and a third direct current port. The first direct current port is connected to a direct current bus of the charging device, the third direct current port is connected to the energy storage device, and the first direct current port and the third direct current port are connected to each other via the switch module, to perform power transmission between the direct current bus of the charging device and the energy storage device.

In this embodiment of this application, the direct current bus of the charging device in the charging system can be interconnected to the energy storage device via the charging connection apparatus. Therefore, the direct current bus of the charging device can invoke, via the charging connection apparatus, power output by the energy storage device, to flexibly adjust entire maximum output power of the charging device, so as to meet different requirements of different charging scenarios for the entire maximum output power of the charging device. In addition, ESS deployment on a direct current bus side of the charging device can be implemented, to provide richer electric energy for the electric vehicle. In addition, this increases utilization of green resources such as stored energy. In addition, compared with ESS deployment on an alternating current bus side, the ESS deployment on the direct current bus side does not need to perform direct current-alternating current inversion on a direct current output by the energy storage device. Therefore, this helps increase energy utilization of the energy storage device and power conversion efficiency of charging the electric vehicle by the charging system.

With reference to the third aspect, in some implementations of the third aspect, the charging system further includes a photovoltaic device, and the plurality of direct current ports further include a fourth direct current port. The fourth direct current port is connected to the photovoltaic device, to perform power transmission between any two of the energy storage device, the photovoltaic device, and the direct current bus of the charging device.

According to a fourth aspect, a charging method is provided, applied to a charging system. The charging system includes a plurality of charging devices and a charging connection apparatus. Each charging device includes a power conversion apparatus, a direct current bus, and a direct current-direct current DC-DC conversion apparatus. The power conversion apparatus is configured to output a direct current to the direct current bus, and the DC-DC conversion apparatus is configured to: receive the direct current through the direct current bus, perform power conversion on the direct current, and then output a direct current obtained through the conversion to an electric vehicle. The charging connection apparatus includes a plurality of direct current ports and a switch module. The plurality of direct current ports include a first direct current port and a second direct current port. The first direct current port is connected to a direct current bus of one charging device, the second direct current port is connected to a direct current bus of another charging device, and the first direct current port and the second direct current port are connected to each other via the switch module. The charging method includes: controlling the switch module to connect a connection between the first direct current port and the second direct current port; and when the one charging device charges the electric vehicle, in response to that maximum power output by the direct current bus of the one charging device to a DC-DC conversion apparatus of the one charging device is less than required output power of the DC-DC conversion apparatus of the one charging device, controlling the direct current bus of the another charging device to transmit power to the direct current bus of the one charging device via the charging connection apparatus.

In this embodiment of this application, direct current buses of any two charging devices in the charging system are interconnected via the charging connection apparatus, so that when entire maximum output power of any charging device in the charging system does not meet entire maximum output power required for charging the electric vehicle, a direct current bus of another charging device can be scheduled to transmit power to a direct current bus of the any charging device, to flexibly adjust the entire maximum output power of the any charging device, so as to meet the entire maximum output power required for charging the electric vehicle.

With reference to the fourth aspect, in some implementations of the fourth aspect, the charging system further includes at least one of an energy storage device and a photovoltaic device, and the plurality of direct current ports further include at least one of a third direct current port and a fourth direct current port. The third direct current port is connected to the energy storage device, and the fourth direct current port is connected to the photovoltaic device. The controlling the direct current bus of the another charging device to transmit power to the direct current bus of the one charging device via the charging connection apparatus includes: in response to that a grid electricity price is at a valley electricity price, preferentially controlling the direct current bus of the another charging device to transmit the power to the direct current bus of the one charging device via the charging connection apparatus.

With reference to the fourth aspect, in some implementations of the fourth aspect, the charging method further includes: when the charging system includes the energy storage device, in response to that the grid electricity price is at the valley electricity price and remaining electric energy of the energy storage device is less than preset remaining electric energy, controlling the direct current bus of the another charging device to transmit power to the energy storage device.

With reference to the fourth aspect, in some implementations of the fourth aspect, the controlling the direct current bus of the another charging device to transmit power to the direct current bus of the one charging device via the charging connection apparatus includes: in response to that the grid electricity price is not at the valley electricity price, preferentially controlling at least one of the energy storage device and the photovoltaic device to transmit power to the direct current bus of the one charging device via the charging connection apparatus.

With reference to the fourth aspect, in some implementations of the fourth aspect, the preferentially controlling at least one of the energy storage device and the photovoltaic device to transmit power to the direct current bus of the one charging device via the charging connection apparatus includes: preferentially controlling at least one of the energy storage device and the photovoltaic device to transmit the power to the direct current bus of the one charging device via the charging connection apparatus; and in response to that maximum power converged to the direct current bus of the one charging device is less than the required output power, controlling the direct current bus of the another charging device to transmit the power to the direct current bus of the one charging device via the charging connection apparatus.

For beneficial effects of the second aspect to the fourth aspect, refer to the beneficial effects of the first aspect. Details are not described herein again.

### BRIEF DESCRIPTION OF DRAWINGS

FIG. 1 is a diagram of a structure of a charging system according to an embodiment of this application;
FIG. 2 is a diagram of a connection structure of the charging system shown in FIG. 1;
FIG. 3 is a diagram of an example of a specific structure of a charging power unit shown in FIG. 2 according to an embodiment of this application;
FIG. 4 is a diagram of another example of a specific structure of a charging power unit shown in FIG. 2 according to an embodiment of this application;
FIG. 5 is a diagram of a structure of a charging system according to an embodiment of this application;
FIG. 6 is a diagram of another structure of a charging system according to an embodiment of this application;
FIG. 7 is a diagram of still another structure of a charging system according to an embodiment of this application;
FIG. 8 is a diagram of a structure of a charging connection apparatus according to an embodiment of this application;
FIG. 9 is a diagram of another structure of a charging connection apparatus according to an embodiment of this application;
FIG. 10 is a diagram of a structure of a charging connection apparatus according to an embodiment of this application;
FIG. 11 is a diagram of another structure of a charging connection apparatus according to an embodiment of this application;
FIG. 12 is a diagram of another structure of a charging connection apparatus according to an embodiment of this application;
FIG. 13 is a schematic of an example of a specific topology structure of a switch module according to an embodiment of this application;
FIG. 14 is a schematic of another example of a specific topology structure of a switch module according to an embodiment of this application;
FIG. 15 is a schematic of still another example of a specific topology structure of a switch module according to an embodiment of this application;
FIG. 16 is a diagram of an example of a structure of a charging system according to an embodiment of this application;
FIG. 17 is a diagram of another example of a structure of a charging system according to an embodiment of this application;
FIG. 18 is a diagram of an example of a structure of a charging system according to an embodiment of this application;
FIG. 19 is a diagram of another example of a structure of a charging system according to an embodiment of this application;
FIG. 20 is a diagram of another example of a structure of a charging system according to an embodiment of this application;
FIG. 21 is a diagram of another example of a structure of a charging system according to an embodiment of this application;
FIG. 22 is a diagram of a structure of a charging system according to an embodiment of this application;
FIG. 23 is a diagram of another structure of a charging system according to an embodiment of this application;
FIG. 24 is a schematic flowchart of a charging method according to an embodiment of this application; and
FIG. 25A and FIG. 25B are a schematic flowchart of another charging method according to an embodiment of this application.

### DESCRIPTION OF EMBODIMENTS

Before embodiments of this application are described, the following several descriptions are first provided.

In descriptions of embodiments of this application, an "electrical connection" may be understood as a manner of a direct electrical connection or an indirect electrical connection between two electrical elements to implement signal transmission. For example, that A is electrically connected to B may be understood as that A is directly electrically connected to B, or may be understood as that A is indirectly electrically connected to B via one or more other electrical elements.

In the descriptions of embodiments of this application, unless otherwise specified, "and/or" describes only an association relationship for describing associated objects and represents that three relationships may exist. For example, A and/or B may represent the following three cases: Only A exists, both A and B exist, and only B exists.

In the descriptions of embodiments of this application, the terms "first" and "second" are merely intended for description, and shall not be understood as an indication or implication of relative importance or implicit indication of a quantity of indicated technical features. Therefore, a feature limited by "first" and "second" may explicitly or implicitly include one or more features.

The following first briefly describes technical terms in this application, to facilitate subsequent understanding of embodiments of this application.

A peak electricity price and a valley electricity price may form an electricity price system in which electricity fees are measured based on peak power consumption and valley power consumption. The peak power consumption generally refers to power consumed when customers use the most electricity and power supply is insufficient, for example, power consumption in the daytime. A peak power consumption time period may be referred to as a peak time period, and an electricity price during the peak power consumption is referred to as the peak electricity price. The valley power consumption generally refers to power consumed when a quantity of customers is small and power supply is sufficient, for example, power consumption at night. A valley power consumption time period may be referred to as a valley time period, and an electricity price during the valley power consumption is referred to as the valley electricity price. A power consumption time period other than the peak power consumption time period and the valley power consumption time period is a normal time period that may also be referred to as a normal period, and an electricity price in the normal period is referred to as a normal electricity price. A billing rate of the peak electricity price is generally the highest, a billing rate of the normal electricity price is the second highest, and a billing rate of the valley electricity price is the lowest.

The following describes technical solutions of this application with reference to accompanying drawings.

First, for ease of understanding the technical solutions provided in embodiments of this application, the following first describes application scenarios to which embodiments of this application are applicable.

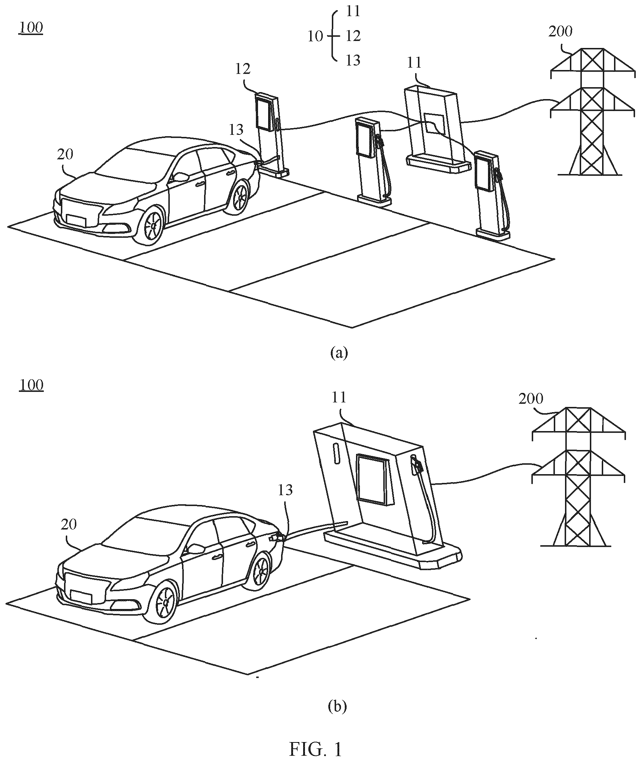

FIG. 1 is a diagram of an example of a structure of a charging system 100 according to an embodiment of this application.

With reference to (a) and (b) in FIG. 1, the charging system 100 may include a charging device 10 and an electric vehicle 20. The charging device 10 may be configured to: receive an alternating current output by an external power grid 200, convert the alternating current into a stable direct current, and then transmit the stable direct current to the electric vehicle 20, to charge the electric vehicle 20. Alternatively, the electric vehicle 20 may reversely output electric energy to an external power grid 200 via the charging device 10.

It may be understood that, in this embodiment of this application, the alternating current output by the external power grid 200 may also be referred to as mains.

In some embodiments, as shown in (a) in FIG. 1, the charging device 10 may be a separated charging pile. Specifically, the charging device 10 may include a charging power unit 11, at least one charging terminal 12, and at least one charging connector 13. The charging power unit 11 is connected to the at least one charging terminal 12, the at least one charging terminal 12 is connected to the at least one charging connector 13, and each charging connector 13 is configured to connect to an electric vehicle 20. During specific implementation, one charging terminal 12 may be connected to one or more charging connectors 13.

The charging power unit 11 may include a plurality of power conversion apparatuses. The plurality of power conversion apparatuses may convert the alternating current from the external power grid 200 into the stable direct current, and then transmit the stable direct current to the charging terminal 12. The charging terminal 12 may transmit the stable direct current to the electric vehicle 20 via the connected charging connector 13, to charge the electric vehicle 20.

The charging terminal 12 may include a housing, a human-machine interaction interface, a charging control unit, a metering and billing unit, and the like, and is configured to perform information exchange, energy transmission, metering and billing, and the like with the electric vehicle 20.

The electric vehicle 20 may be a transportation vehicle driven by electric energy to run. The electric vehicle 20 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging device 10 may be an integrated charging pile. Specifically, a human-machine interaction interface, a charging control unit, a metering and billing unit, and the like may be directly disposed in a charging power unit 11, so that the charging device 10 may include only the charging power unit 11 and at least one charging connector 13 connected to the charging power unit 11, but does not include a charging terminal 12. A plurality of power conversion apparatuses in the charging power unit 11 may convert the alternating current from the external power grid 200 into the stable direct current, and then directly transmit the stable direct current to the electric vehicle 20 via the charging connector 13.

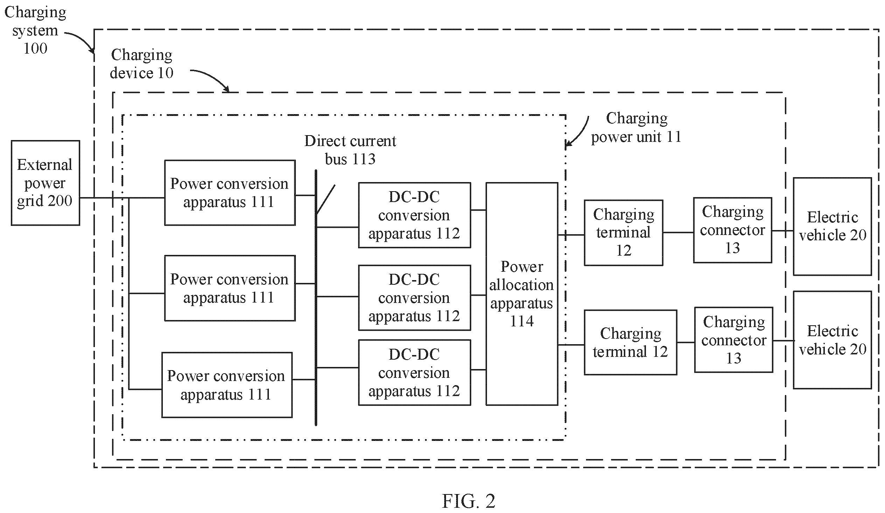

FIG. 2 shows an example of a diagram of a connection structure of the charging system 100 shown in FIG. 1. The charging power unit 11 includes a plurality of power conversion apparatuses 111, a plurality of DC-DC conversion apparatuses 112, a direct current bus 113, and a power allocation apparatus 114.

The plurality of power conversion apparatuses 111 are connected in parallel between the external power grid 200 and the direct current bus 113. The external power grid 200 may be an AC power grid. The plurality of power conversion apparatuses 111 are configured to: receive an alternating current from the external power grid 200, convert the alternating current into direct currents, and then output the direct currents to the direct current bus 113. To be specific, the direct current bus 113 may converge the direct currents output by the plurality of power conversion apparatuses 111.

Input ends of the plurality of DC-DC conversion apparatuses 112 are connected to the direct current bus 113, and output ends of the plurality of DC-DC conversion apparatuses 112 are connected to charging connectors 13 via the power allocation apparatus 114. The plurality of DC-DC conversion apparatuses 112 are configured to: receive, through the direct current bus 113, the direct currents output by the plurality of power conversion apparatuses 111, further convert the direct currents into direct currents applicable to the electric vehicle 20, and then transmit the direct currents to the power allocation apparatus 114.

The power allocation apparatus 114 is configured to: dynamically allocate, based on charging power actually required by the electric vehicle 20, the direct currents output by the plurality of DC-DC conversion apparatuses 112, and transmit charging power obtained through the allocation to the electric vehicle 20 via the charging connectors 13 connected to charging terminals 12, or directly transmit charging power obtained through the allocation to the charging connectors 13 (not shown in FIG. 2) connected to the charging power unit 11, to charge the electric vehicle 20.

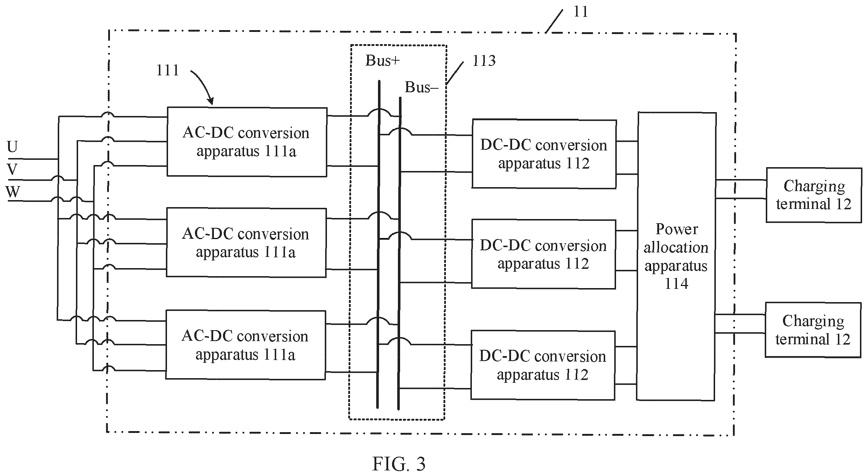

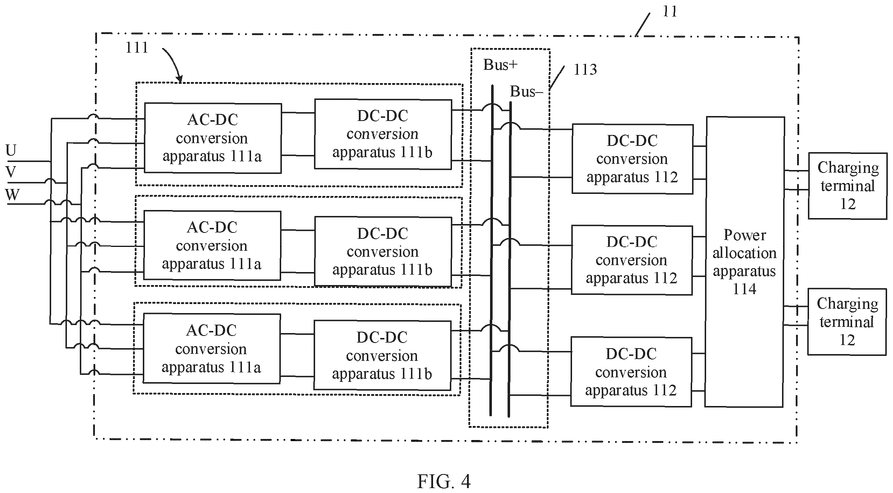

FIG. 3 and FIG. 4 are respectively diagrams of specific structures of the charging power unit 11 shown in FIG. 2.

In an example, with reference to FIG. 2 and FIG. 3, each power conversion apparatus 111 includes an alternating current-direct current (alternating current-direct current, AC-DC) conversion apparatus 111a, and the direct current bus 113 includes a positive direct current bus Bus+ and a negative direct current bus Bus-. A phase line U, a phase line V, and a phase line W at an input end of the AC-DC conversion apparatus 111a are configured to receive a three-phase alternating current from the external power grid 200, to convert the three-phase alternating current into a first direct current. An output end of the AC-DC conversion apparatus 111a may be separately connected to the positive direct current bus Bus+ and the negative direct current bus Bus-, to output the first direct current obtained through conversion to the positive direct current bus Bus+ and the negative direct current bus Bus-. The DC-DC conversion apparatuses 112 are configured to: receive the first direct currents through the positive direct current bus Bus+ and the negative direct current bus Bus-, further convert the first direct currents into the direct currents applicable to the electric vehicle 20, and then transmit the direct currents to the power allocation apparatus 114.

In another example, with reference to FIG. 2 and FIG. 4, each power conversion apparatus 111 includes an AC-DC conversion apparatus 111a and a direct current-direct current (direct current-direct current, DC-DC) conversion apparatus 111b that are connected in series, and the direct current bus 113 includes a positive direct current bus Bus+ and a negative direct current bus Bus-. A phase line U, a phase line V, and a phase line W at an input end of the AC-DC conversion apparatus 111a are configured to receive a three-phase alternating current from the external power grid 200, to convert the three-phase alternating current into a first direct current and then output the first direct current to the connected DC-DC conversion apparatus 11 1b. An output end of the DC-DC conversion apparatus 11 1b may be separately connected to the positive direct current bus Bus+ and the negative direct current bus Bus-, and is configured to: convert the received first direct current into a second direct current, and then output the second direct current to the positive direct current bus Bus+ and the negative direct current bus Bus-. The DC-DC conversion apparatuses 112 are configured to: receive the second direct currents through the positive direct current bus Bus+ and the negative direct current bus Bus-, further convert the second direct currents into the direct currents applicable to the electric vehicle 20, and then transmit the direct currents to the power allocation apparatus 114.

It may be understood that, based on an actual application requirement, the external power grid 200 may alternatively be a direct current microgrid. In this case, the power conversion apparatuses 111 may include only the DC-DC conversion apparatuses 111b, but do not include the AC-DC conversion apparatuses 111a. The DC-DC conversion apparatuses 111b are configured to: receive a direct current from the direct current microgrid, convert the direct current into third direct currents, and then output the third direct currents to the positive direct current bus Bus+ and the negative direct current bus Bus-. The DC-DC conversion apparatuses 112 are configured to: receive the third direct currents through the positive direct current bus Bus+ and the negative direct current bus Bus-, further convert the third direct currents into the direct currents applicable to the electric vehicle 20, and then transmit the direct currents to the power allocation apparatus 114.

As described in the foregoing background part, in a current actual application, different charging scenarios generally have different requirements for entire maximum output power of the charging device 10. For example, in a high-power charging station scenario, as users have increasingly high requirements for charging time, required entire maximum output power of the charging device 10 increases accordingly, to charge electric vehicles in a high power manner and increase a charging speed. In a low-power charging station scenario, to meet low-power charging requirements of electric vehicles of common vehicle models, required entire maximum output power of the charging device 10 is generally low.

Alternatively, in a large charging station scenario, the charging device 10 generally needs to be able to charge a large quantity of electric vehicles at the same time. Therefore, the charging device 10 needs to have high entire maximum output power. In a small charging station scenario, the charging device 10 generally needs to be able to charge a small quantity of electric vehicles at the same time. Therefore, the charging device 10 needs to have low entire maximum output power.

However, existing charging devices mostly have fixed entire maximum output power. For example, charging devices in a high-power charging station scenario are mostly directly designed based on high power. If the high-power charging device is used to charge a low-power electric vehicle, power resources are easily wasted. In addition, the high-power charging device usually has high costs and a large size, and is limited in mounting space and insufficient in flexibility of mounting in a special scenario, for example, a parking lot. Charging devices in a low-power charging station scenario are mostly directly designed based on low power. If the low-power charging device is used to charge an electric vehicle of an ultra-fast charging vehicle model, a requirement of the electric vehicle for high-power ultra-fast charging may not be met.

Therefore, how to meet different requirements of different charging scenarios for entire maximum output power of charging devices is an urgent problem to be resolved.

Based on the foregoing content, embodiments of this application provide a charging connection apparatus and a charging system, so that power transmission between direct current buses of a plurality of charging devices can be performed via the charging connection apparatus, to flexibly adjust entire maximum output power of each charging device, so as to meet different requirements of different charging scenarios for entire maximum output power of the charging device.

The following describes in detail the charging connection apparatus and the charging system provided in embodiments of this application with reference to the accompanying drawings. It should be noted that, for ease of understanding, in the accompanying drawings provided in embodiments of this application, a solid-line connection line represents a power transmission line, and a dashed-line connection line represents a signal transmission line.

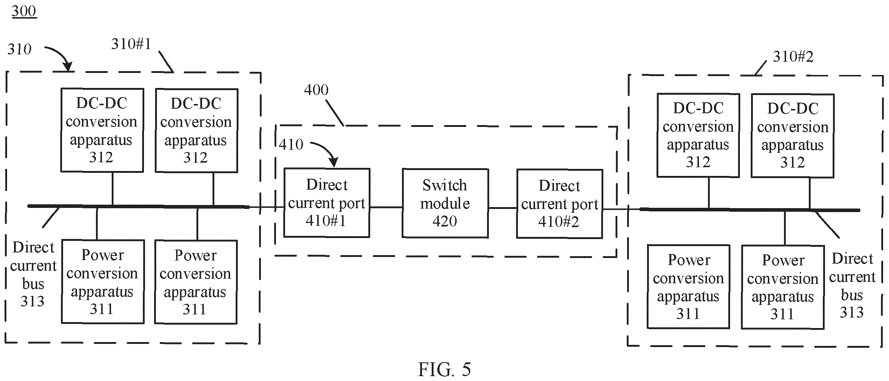

FIG. 5 is a diagram of a structure of a charging system 300 according to an embodiment of this application.

Refer to FIG. 5. The charging system 300 may include a plurality of charging devices 310 and a charging connection apparatus 400.

Each charging device 310 includes a plurality of power conversion apparatuses 311, a plurality of DC-DC conversion apparatuses 312, and a direct current bus 313. The plurality of power conversion apparatuses 311 are configured to: receive an alternating current from an external power grid, convert the alternating current into direct currents, and then output the direct currents to the direct current bus 313. To be specific, the direct current bus 313 may converge the direct currents output by the plurality of power conversion apparatuses 311. The plurality of DC-DC conversion apparatuses 312 are configured to: receive, through the direct current bus 313, the direct currents output by the plurality of power conversion apparatuses 311, perform power conversion on the received direct currents, and then output direct currents obtained through the conversion to an electric vehicle.

It may be understood that the charging device 310 may be the separated charging pile or the integrated charging pile shown in FIG. 1. For specific descriptions of the plurality of power conversion apparatuses 311, the plurality of DC-DC conversion apparatuses 312, and the direct current bus 313 in the charging device 310, refer to the related descriptions of the charging device 10 shown in FIG. 1 to FIG. 4. Details are not described herein again.

It should be noted that, for ease of description and understanding, in this embodiment of this application, an example in which the charging device 310 is the separated charging pile shown in (a) in FIG. 1, and the power conversion apparatus 311 is the power conversion apparatus 111, shown in FIG. 3, including the AC-DC conversion apparatus 111a is used for description.

Still refer to FIG. 5. The charging connection apparatus 400 may include a plurality of direct current ports 410 and a switch module 420. The plurality of direct current ports 410 include a first direct current port 410#1 and a second direct current port 410#2, the first direct current port 410#1 is connected to a direct current bus 313 of one charging device 310 in the charging system 300, and the second direct current port 410#2 is connected to a direct current bus 313 of another charging device 310 in the charging system 300, to perform power transmission between the direct current bus 313 of the one charging device 310 and the direct current bus 313 of the another charging device 310. The switch module 420 is configured to disconnect or connect a connection between the first direct current port 410#1 and the second direct current port 410#2.

It may be understood that, in this embodiment of this application, the first direct current port 410# 1 and the second direct current port 410#2 may be any two direct current ports 410 that are in the plurality of direct current ports 410 of the charging connection apparatus 400 and that are configured to connect to direct current buses 313 of different charging devices 310.

It may be further understood that, in this embodiment of this application, direct current buses 313 of any two charging devices 310 in the charging system 300 are respectively connected to the first direct current port 410#1 and the second direct current port 410#2, that is, the direct current buses 313 of the any two charging devices 310 in the charging system 300 are interconnected through the first direct current port 410#1 and the second direct current port 410#2.

For example, the charging system 300 shown in FIG. 5 includes two charging devices 310, that is, the charging system includes a charging device 310# 1 and a charging device 310#2. The first direct current port 410#1 of the charging connection apparatus 400 is connected to a direct current bus 313 of the charging device 310#1, and the second direct current port 410#2 is connected to a direct current bus 313 of the charging device 310#2. When the switch module 420 connects the connection between the first direct current port 410#1 and the second direct current port 410#2, the direct current bus 313 of the charging device 310#1 and the direct current bus 313 of the charging device 310#2 are interconnected. In this way, the direct current bus 313 of the charging device 310#1 and the direct current bus 313 of the charging device 310#2 may transmit respective converged power to each other, to perform power sharing.

When the charging device 310#1 charges the electric vehicle, if maximum power output by a plurality of power conversion apparatuses 311 of the charging device 310#1 to the direct current bus 313 of the charging device 310#1 is greater than or equal to required output power, for charging the electric vehicle, of a plurality of DC-DC conversion apparatuses 312 of the charging device 310#1, that is, if entire maximum output power of the charging device 310#1 meets entire maximum output power required for charging the electric vehicle, the charging device 310#1 may not invoke power converged by the direct current bus 313 of the charging device 310#2, but charge the electric vehicle through independent operation.

If maximum power output by a plurality of power conversion apparatuses 311 of the charging device 310#1 to the direct current bus 313 of the charging device 310#1 is less than required output power, for charging the electric vehicle, of a plurality of DC-DC conversion apparatuses 312 of the charging device 310#1, that is, if entire maximum output power of the charging device 310#1 does not meet entire maximum output power required for charging the electric vehicle, the charging device 310#1 may invoke, via the charging connection apparatus 400, power converged by the direct current bus 313 of the charging device 310#2, to increase power received by the plurality of DC-DC conversion apparatuses 312 of the charging device 310#1 through the direct current bus 313 of the charging device 310#1.

Specifically, power output by a plurality of power conversion apparatuses 311 in the charging device 310#2 is converged to the direct current bus 313 of the charging device 310#2, and when the switch module 420 connects the connection between the first direct current port 410#1 and the second direct current port 410#2, the direct current bus 313 of the charging device 310#2 may transmit converged power to the direct current bus 313 of the charging device 310#1 through a power transmission line between the second direct current port 410#2 and the first direct current port 410# 1, to increase power converged to the direct current bus 313 of the charging device 310#1, and further increase the power received by the plurality of DC-DC conversion apparatuses 312 of the charging device 310#1 through the direct current bus 313 of the charging device 310#1, that is, increase the entire maximum output power of the charging device 310# 1, so as to meet the entire maximum output power required for charging the electric vehicle.

In this embodiment of this application, the direct current buses 313 of the any two charging devices 310 in the charging system 300 can be interconnected via the charging connection apparatus 400, so that any charging device 310 in the charging system 300 can invoke, via the charging connection apparatus 400, power converged by a direct current bus 313 of another charging device 310, to flexibly adjust entire maximum output power of the any charging device 310, so as to meet different requirements of different charging scenarios for entire maximum output power of the charging device 310.

For example, to enable any charging device 310 in the charging system 300 to meet a requirement of a fully liquid-cooled ultra-fast charging scenario for entire maximum output power, the any charging device 310 can invoke, via the charging connection apparatus 400, power converged by direct current buses 313 of a plurality of other charging devices 310, to increase maximum output power for charging an electric vehicle via a plurality of DC-DC conversion apparatuses 312 in the any charging device 310 through a charging connector, and facilitate a charging speed of one kilometer of driving range per second, that is, facilitate implementation of charging the electric vehicle with electric energy for one kilometer of driving range per second, so as to bring charging experience of "charge up while you coffee up" to a user.

It may be understood that a charging power unit, a charging terminal, and a charging connector in a charging device in the fully liquid-cooled ultra-fast charging scenario all dissipate heat in a liquid cooling manner, and maximum output power of a single connector of the charging device is greater than or equal to a preset power threshold. The preset power threshold may be, for example, 250 kW.

In addition, invoking, by the any charging device 310, the power converged by the direct current bus 313 of the another charging device 310 does not affect charging, by the another charging device 310, an electric vehicle through the charging connector. Therefore, this helps improve system power utilization of the charging system 300 and flexibility of allocating power by the charging system 300.

In addition, because the any charging device 310 in the charging system 300 can invoke, via the charging connection apparatus 400, power converged by a direct current bus 313 of another charging device 310, each charging device 310 in the charging system 300 may be designed based on low power. In an actual application, depending on a specific charging scenario, the charging device 310 may meet a requirement for low entire maximum output power in an independent operation manner, or meet a requirement for high entire maximum output power in a manner of invoking power converged by a direct current bus 313 of another charging device 310. Compared with a charging device 310 designed based on high power, a low-power charging device 310 is more conducive to reducing production costs of the charging device 310, reducing a size of the charging device 310, and facilitating transportation and mounting of the charging device 310.

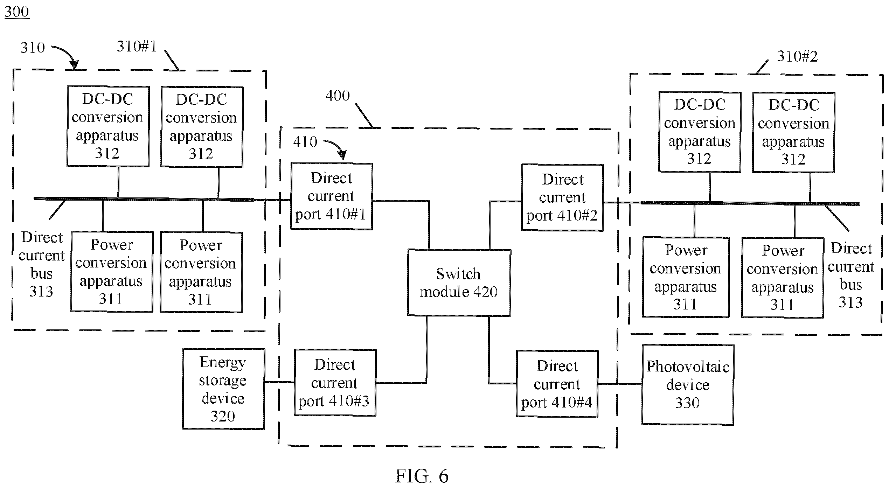

FIG. 6 is a diagram of another structure of the charging system 300 according to an embodiment of this application.

Refer to FIG. 6. Different from that in the embodiment shown in FIG. 5, in some embodiments, the charging system 300 may further include at least one of an energy storage device 320 and a photovoltaic device 330, and the plurality of direct current ports 410 of the charging connection apparatus 400 may further include at least one of a third direct current port 410#3 and a fourth direct current port 410#4. The third direct current port 410#3 is connected to the energy storage device 320, and the fourth direct current port 410#4 is connected to the photovoltaic device 330, so that power transmission between any two of the charging device 310#1 connected to the first direct current port 410#1, the charging device 310#2 connected to the second direct current port 410#2, the energy storage device 320, and the photovoltaic device 330 in the charging system 300 can also be performed.

It may be understood that, in this embodiment of this application, the third direct current port 410#3 may be a direct current port 410 that is in the plurality of direct current ports 410 of the charging connection apparatus 400 and that is configured to connect to the energy storage device 320, and the fourth direct current port 410#4 may be a direct current port 410 that is in the plurality of direct current ports 410 of the charging connection apparatus 400 and that is configured to connect to the photovoltaic device 330.

It may be further understood that, during specific implementation, to enable power transmission between the any two of the charging device 310#1 connected to the first direct current port 410#1, the charging device 310#2 connected to the second direct current port 410#2, the energy storage device 320, and the photovoltaic device 330 in the charging system 300 to also be performed, any two of the plurality of direct current ports 410 of the charging connection apparatus 400 are connected to each other via the switch module 420. To be specific, any two direct current ports 410 of the first direct current port 410# 1, the second direct current port 410#2, the third direct current port 410#3, and the fourth direct current port 410#4 are connected to each other via the switch module 420.

For example, the charging system 300 shown in FIG. 6 includes two charging devices 310 (namely, the charging device 310#1 and the charging device 310#2), one energy storage device 320, and one photovoltaic device 330. The first direct current port 410#1 of the charging connection apparatus 400 is connected to the direct current bus 313 of the charging device 310#1, the second direct current port 410#2 is connected to the direct current bus 313 of the charging device 310#2, the third direct current port 410#3 is connected to the energy storage device 320, the fourth direct current port 410#4 is connected to the photovoltaic device 330, and any two of the four direct current ports 410 are connected to each other via the switch module 420.

When the switch module 420 connects a connection between any two of the four direct current ports 410, any two of the direct current bus 313 of the charging device 310#1, the direct current bus 313 of the charging device 310#2, the energy storage device 320, and the photovoltaic device 330 are interconnected. In this way, the any two of the direct current bus 313 of the charging device 310#1, the direct current bus 313 of the charging device 310#2, the energy storage device 320, and the photovoltaic device 330 may transmit power to each other, to perform power sharing, namely, implement PV and ESS deployment on a direct current bus side of the charging device 310#1 and a direct current bus side of the charging device 310#2.

When the charging device 310#1 charges the electric vehicle, if maximum power output by a plurality of power conversion apparatuses 311 in the charging device 310#1 to the direct current bus 313 of the charging device 310#1 is less than required output power, for charging the electric vehicle, of a plurality of DC-DC conversion apparatuses 312 of the charging device 310#1, that is, entire maximum output power of the charging device 310#1 does not meet entire maximum output power required for charging the electric vehicle, the charging device 310#1 may invoke, via the charging connection apparatus 400, power converged by the direct current bus 313 of the charging device 310#2, or invoke, via the charging connection apparatus 400, power output by the energy storage device 320 and/or the photovoltaic device 330, to increase power received by the plurality of DC-DC conversion apparatuses 312 of the charging device 310#1 through the direct current bus 313 of the charging device 310#1.

Specifically, when the switch module 420 connects the connection between any two direct current ports 410 in the first direct current port 410#1 to the fourth direct current port 410#4, the power converged by the direct current bus 313 of the charging device 310#2 may be transmitted to the direct current bus 313 of the charging device 310#1 through a power transmission line between the second direct current port 410#2 and the first direct current port 410#1, the power output by the energy storage device 320 may be transmitted to the direct current bus 313 of the charging device 310# 1 through a power transmission line between the third direct current port 410#3 and the first direct current port 410# 1, and the power output by the photovoltaic device 330 may be transmitted to the direct current bus 313 of the charging device 310#1 through a power transmission line between the fourth direct current port 410#4 and the first direct current port 410# 1, to increase power converged to the direct current bus 313 of the charging device 310#1, so as to increase the power converged to the direct current bus 313 of the charging device 310#1, and further increase power received by the plurality of DC-DC conversion apparatuses 312 of the charging device 310#1 through the direct current bus 313 of the charging device 310#1, that is, increase the entire maximum output power of the charging device 310#1, so as to meet the entire maximum output power required for charging the electric vehicle.

It may be understood that this embodiment of this application is described by using an example in which the charging system 300 includes one energy storage device 320 and one photovoltaic device 330. In some other embodiments, the charging system 300 may alternatively include a plurality of energy storage devices 320 and/or a plurality of photovoltaic devices 330.

In this embodiment of this application, the direct current bus 313 of each charging device 310 in the charging system 300 can be interconnected to the direct current bus 313 of another charging device 310 via the charging connection apparatus 400, and can also be interconnected to the energy storage device 320 and/or the photovoltaic device 330 via the charging connection apparatus 400. Therefore, any charging device 310 in the charging system 300 can invoke, via the charging connection apparatus 400, power converged by a direct current bus 313 of another charging device 310, and can also invoke, via the charging connection apparatus 400, power output by the energy storage device 320 and/or the photovoltaic device 330. In this way, entire maximum output power of the any charging device 310 can be flexibly adjusted, to meet different requirements of different charging scenarios for the entire maximum output power of the charging device 310, and PV and ESS deployment on a direct current bus side of the charging device 310 can be implemented, to provide richer electric energy for the electric vehicle. In addition, this increases utilization of green resources such as PV energy and stored energy.

In addition, compared with PV and ESS deployment on an alternating current bus side, the PV and ESS deployment on the direct current bus side does not need to perform direct current-alternating current inversion on direct currents output by the energy storage device 320 and the photovoltaic device 330. Therefore, this helps increase energy utilization of the energy storage device 320 and the photovoltaic device 330 and power conversion efficiency of charging the electric vehicle by the charging system 300. In addition, the direct current bus 313 of the any charging device 310 in the charging system 300 is interconnected to the direct current bus 313 of the another charging device 310, the energy storage device 320, and/or the photovoltaic device 330 via the charging connection apparatus 400, so that a plurality of power transmission paths in the charging system 300 can be implemented, and free and efficient flow of energy between mains, PV energy, and stored energy in the charging system 300 is implemented.

For example, in addition to invoking the power of the energy storage device 320 and the photovoltaic device 330 via the charging connection apparatus 400, the direct current bus 313 of the charging device 310#1 may also transmit, via the charging connection apparatus 400, power output by the plurality of power conversion apparatuses 311 of the charging device 310#1 to the energy storage device 320, to charge the energy storage device 320, which is also referred to as storing electric energy. Alternatively, the photovoltaic device 330 may transmit, to the energy storage device 320 via the charging connection apparatus 400, electric energy converted from light energy.

It may be understood that, in the foregoing embodiment, each energy storage device 320 and each photovoltaic device 330 in the charging system 300 each are connected to one direct current port 410. This helps improve flexibility of power allocation between the direct current bus 313 of the charging device 310 300, the energy storage device 320, and the photovoltaic device 330 in the charging system. In some other embodiments, the energy storage device 320 and the photovoltaic device 330 in the charging system 300 may be connected to one direct current port 410. In other words, in some other embodiments, the third direct current port 410#3 and the fourth direct current port 410#4 may be one direct current port 410.

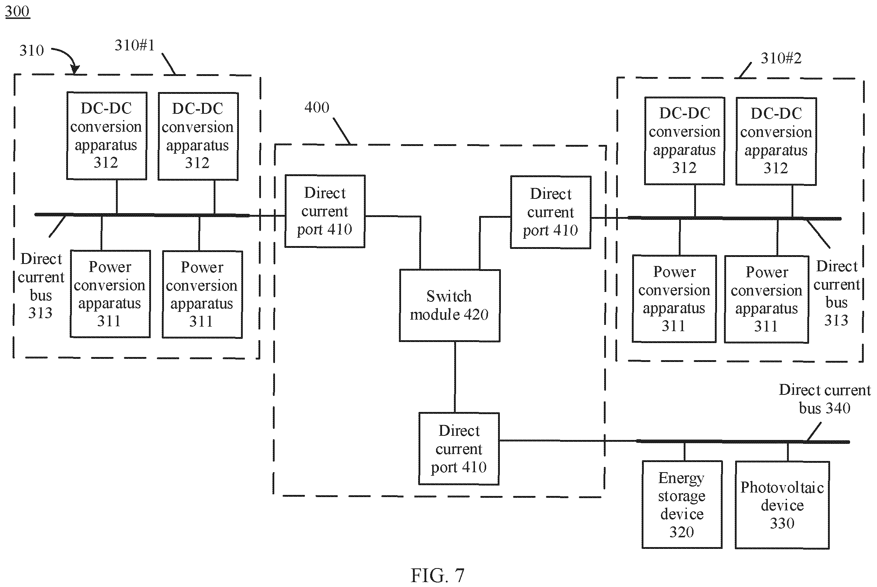

Specifically, refer to FIG. 7. FIG. 7 is a diagram of still another structure of the charging system 300 according to an embodiment of this application.

As shown in FIG. 7, different from that in the embodiment shown in FIG. 6, the charging system 300 may further include a direct current bus 340. The direct current bus 340 is connected to one direct current port 410, and both the energy storage device 320 and the photovoltaic device 330 in the charging system 300 are connected to the direct current bus 340. To be specific, PV and ESS deployment is first performed on a direct current bus 340 side by the energy storage device 320 and the photovoltaic device 330, and then the energy storage device 320 and the photovoltaic device 330 are interconnected to a direct current bus 313 of each charging device 310 in the charging system 300 via the charging connection apparatus 400, to implement PV and ESS deployment on a direct current bus side of the charging device 310.

Therefore, when the charging system 300 includes a plurality of energy storage devices 320 and/or a plurality of photovoltaic devices 330, compared with that each energy storage device 320 and each photovoltaic device 330 each are connected to one direct current port 410, the energy storage device 320 and the photovoltaic device 330 in the charging system 300 are connected to a same direct current port 410, so that a quantity of direct current ports 410 in the charging connection apparatus 400 can be reduced, to help reduce processing difficulty of the charging connection apparatus 400 and reduce production costs of the charging connection apparatus 400.

It may be understood that, for ease of description and understanding, in this embodiment of this application, an example in which each energy storage device 320 and each photovoltaic device 330 in the charging system 300 each are connected to one direct current port 410 is used, that is, an example in which each energy storage device 320 is connected to one third direct current port 410#3 and each photovoltaic device 330 is connected to one fourth direct current port 410#4 is used for description.

The following specifically describes the charging connection apparatus 400 in the charging system 300.

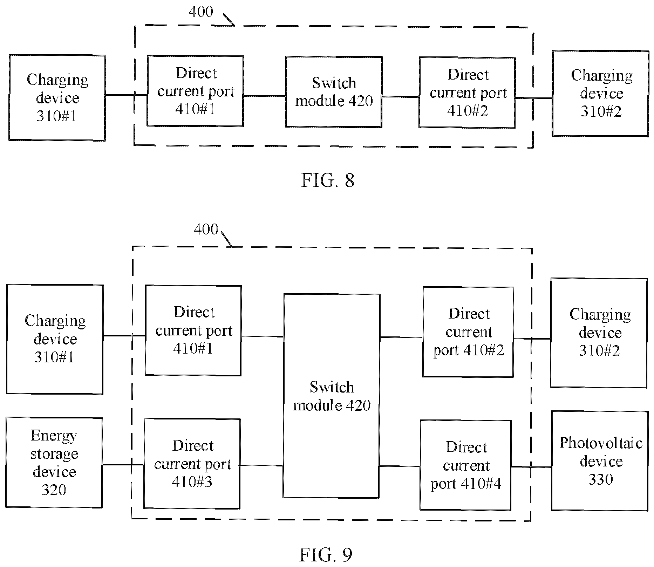

FIG. 8 is a diagram of a structure of the charging connection apparatus 400 according to an embodiment of this application.

Refer to FIG. 8. The charging connection apparatus 400 may include a plurality of direct current ports 410 and a switch module 420.

The plurality of direct current ports 410 include a first direct current port 410#1 and a second direct current port 410#2. The first direct current port 410#1 is configured to connect to a direct current bus of one charging device, and the second direct current port 410#2 is configured to connect to a direct current bus of another charging device. For example, the first direct current port 410#1 and the second direct current port 410#2 are respectively configured to connect to the direct current bus 313 of the charging device 310#1 and the direct current bus 313 of the charging device 310#2 shown in FIG. 5. In addition, the first direct current port 410#1 and the second direct current port 410#2 are connected to each other via the switch module 420, so that power transmission between the direct current buses of the two charging devices respectively connected to the first direct current port 410#1 and the second direct current port 410#2 can be performed through the first direct current port 410#1 and the second direct current port 410#2. The switch module 420 is configured to disconnect or connect a connection between the first direct current port 410#1 and the second direct current port 410#2.

For example, the first direct current port 410# 1 of the charging connection apparatus 400 shown in FIG. 8 is connected to the direct current bus 313 of the charging device 310#1 shown in FIG. 5, and the second direct current port 410#2 is connected to the direct current bus 313 of the charging device 310#2 shown in FIG. 5. When the switch module 420 connects the connection between the first direct current port 410#1 and the second direct current port 410#2, the direct current bus 313 of the charging device 310#1 and the direct current bus 313 of the charging device 310#2 are interconnected. In this way, the direct current bus 313 of the charging device 310#1 and the direct current bus 313 of the charging device 310#2 may transmit respective converged power to each other, to perform power sharing.

For related descriptions of performing power sharing between the direct current bus 313 of the charging device 310#1 and the direct current bus 313 of the charging device 310#2 via the charging connection apparatus 400, refer to the related descriptions of the embodiment shown in FIG. 5. Details are not described herein again.

In this embodiment of this application, the plurality of direct current ports 410 of the charging connection apparatus 400 include the first direct current port 410#1 and the second direct current port 410#2 that are configured to connect to direct current buses of different charging devices, and the first direct current port 410#1 and the second direct current port 410#2 are connected to each other via the switch module 420, so that the direct current buses of the different charging devices are interconnected via the charging connection apparatus 400. Further, a direct current bus of any charging device connected to the charging connection apparatus 400 can invoke, via the charging connection apparatus 400, power converged by a direct current bus of another charging device connected to the charging connection apparatus 400, to flexibly adjust entire maximum output power of the any charging device, so as to meet different requirements of different charging scenarios for the entire maximum output power of the any charging device.

In addition, the charging device can invoke, via the charging connection apparatus 400, the power converged by the direct current bus of the another charging device. Therefore, this helps implement a low-power design of the charging device, thereby reducing production costs of the charging device, reducing a size of the charging device, and facilitating transportation and mounting of the charging device.

FIG. 9 is a diagram of another structure of the charging connection apparatus 400 according to an embodiment of this application.

Refer to FIG. 9. Different from that in the embodiment shown in FIG. 8, the plurality of direct current ports 410 of the charging connection apparatus 400 may further include at least one of a third direct current port 410#3 and a fourth direct current port 410#4. The third direct current port 410#3 is configured to connect to an energy storage device, for example, configured to connect to the energy storage device 320 shown in FIG. 6, and the fourth direct current port 410#4 is configured to connect to a photovoltaic device, for example, configured to connect to the photovoltaic device 330 shown in FIG. 6, so that power transmission between any two of a direct current bus of one charging device connected to the first direct current port 410#1, a direct current bus of another charging device connected to the second direct current port 410#2, the energy storage device connected to the third direct current port 410#3, and the photovoltaic device connected to the fourth direct current port 410#4 can also be performed.

It may be understood that, during specific implementation, any two of the plurality of direct current ports 410 of the charging connection apparatus 400 are connected to the switch module 420. In other words, any two direct current ports 410 of the first direct current port 410#1, the second direct current port 410#2, the third direct current port 410#3, and the fourth direct current port 410#4 are connected to each other via the switch module 420, so that power transmission between any two of direct current buses of different charging devices, the energy storage device, and the photovoltaic device that are connected to the first direct current port 410#1 to the fourth direct current port 410#4 can also be performed. The switch module 420 is configured to disconnect or connect any two of the plurality of direct current ports 410 of the charging connection apparatus 400.

For example, the first direct current port 410#1 of the charging connection apparatus 400 shown in FIG. 9 is connected to the direct current bus of the charging device 310#1 shown in FIG. 6, the second direct current port 410#2 is connected to the direct current bus of the charging device 310#2 shown in FIG. 6, the third direct current port 410#3 is connected to the energy storage device 320 shown in FIG. 6, the fourth direct current port 410#4 is connected to the photovoltaic device 330 shown in FIG. 6, and any two of the four direct current ports 410 are connected to each other via the switch module 420. When the switch module 420 connects a connection between any two of the four direct current ports 410, any two of the direct current bus 313 of the charging device 310#1, the direct current bus 313 of the charging device 310#2, the energy storage device 320, and the photovoltaic device 330 are interconnected. In this way, the any two of the direct current bus 313 of the charging device 310#1, the direct current bus 313 of the charging device 310#2, the energy storage device 320, and the photovoltaic device 330 may transmit power to each other, to perform power sharing, namely, implement PV and ESS deployment on a direct current bus side of the charging device 310#1 and a direct current bus side of the charging device 310#2.

For related descriptions of performing power sharing between any two of the direct current bus 313 of the charging device 310#1, the direct current bus 313 of the charging device 310#2, the energy storage device 320, and the photovoltaic device 330 via the charging connection apparatus 400, refer to the related descriptions of the embodiment shown in FIG. 6. Details are not described herein again.

In this embodiment of this application, the plurality of direct current ports 410 of the charging connection apparatus 400 not only include the first direct current port 410#1 and the second direct current port 410#2 that are configured to connect to direct current buses of different charging devices, but also include the third direct current port 410#3 configured to connect to the energy storage device and/or the fourth direct current port 410#4 configured to connect to the photovoltaic device, so that any two of the energy storage device, the photovoltaic device, and the direct current buses of the different charging devices are interconnected via the charging connection apparatus 400. Further, a direct current bus of any charging device connected to the charging connection apparatus 400 can invoke, via the charging connection apparatus 400, power converged by a direct current bus of another charging device, and can also invoke, via the charging connection apparatus 400, power output by the energy storage device and/or the photovoltaic device. In this way, entire maximum output power of the any charging device can be flexibly adjusted, to meet different requirements of different charging scenarios for the entire maximum output power of the charging device, and PV and ESS deployment on a direct current bus side of the any charging device can be implemented, to provide richer electric energy for an electric vehicle. In addition, this increases utilization of green resources such as PV energy and stored energy.

The foregoing describes connections between the charging connection apparatus 400 and the external charging device 310, the energy storage device 320, and the photovoltaic device 330. The following further describes the charging connection apparatus 400 in detail.

It should be understood that, for ease of description and understanding, the following embodiment first further describes the charging connection apparatus 400 in detail by using an example in which the plurality of direct current ports 410 in the charging connection apparatus 400 include the first direct current port 410# 1 and the second direct current port 410#2.

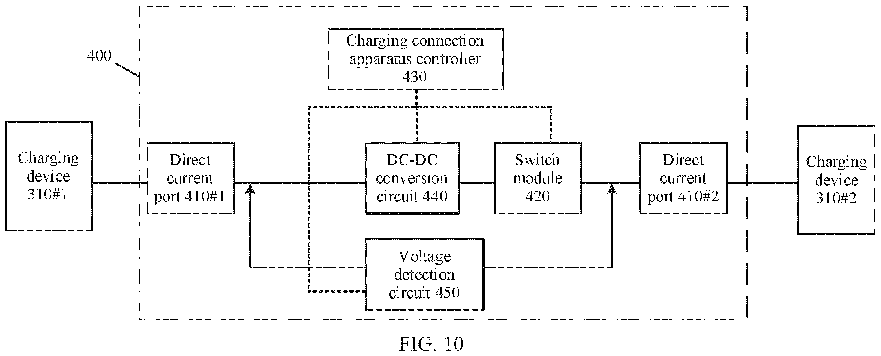

FIG. 10 is a diagram of a structure of the charging connection apparatus 400 according to an embodiment of this application.

Refer to FIG. 10. In some embodiments, to ensure normal operation of power transmission between direct current buses of different charging devices through the first direct current port 410#1 and the second direct current port 410#2, that the switch module 420 is configured to disconnect or connect the connection between the first direct current port 410#1 and the second direct current port 410#2 may specifically include:
when the first direct current port 410#1 is connected to a direct current bus of one charging device, and the second direct current port 410#2 is connected to a direct current bus of another charging device, in response to that a voltage difference between the first direct current port 410#1 and the second direct current port 410#2 is less than or equal to a preset voltage difference, the switch module 420 is configured to connect the connection between the first direct current port 410#1 and the second direct current port 410#2; or
in response to that a voltage difference between the first direct current port 410#1 and the second direct current port 410#2 is greater than a preset voltage difference, the switch module 420 is configured to disconnect the connection between the first direct current port 410#1 and the second direct current port 410#2.

Specifically, for example, the first direct current port 410#1 is connected to the direct current bus 313 of the charging device 310#1 shown in FIG. 5, and the second direct current port 410#2 is connected to the direct current bus 313 of the charging device 310#2 shown in FIG. 5. A voltage value of the first direct current port 410#1 is a voltage value of the direct current bus 313 of the charging device 310# 1, and a voltage value of the second direct current port 410#2 is a voltage value of the direct current bus 313 of the charging device 310#2. Therefore, the voltage difference between the first direct current port 410#1 and the second direct current port 410#2 is a voltage difference between the direct current bus 313 of the charging device 310#1 and the direct current bus 313 of the charging device 310#2.

It may be understood that, that the voltage difference between the first direct current port 410# 1 and the second direct current port 410#2 is less than or equal to the preset voltage difference may be understood as that the voltage value of the direct current bus 313 of the charging device 310#1 is basically consistent with the voltage value of the direct current bus 313 of the charging device 310#2.

In this case, the switch module 420 connects the connection between the first direct current port 410#1 and the second direct current port 410#2, so that a voltage value of power transmitted by one of the charging device 310#1 and the charging device 310#2 to the direct current bus of the other one via the charging connection apparatus 400 can be basically consistent with the voltage value of the direct current bus of the other one. Further, this helps ensure normal operation of power transmission between the direct current bus 313 of the charging device 310#1 and the direct current bus 313 of the charging device 310#2 via the charging connection apparatus 400, and improve security of invoking power between the direct current bus 313 of the charging device 310#1 and the direct current bus 313 of the charging device 310#2 via the charging connection apparatus 400.

That the voltage difference between the first direct current port 410#1 and the second direct current port 410#2 is greater than the preset voltage difference may be understood as that the voltage value of the direct current bus 313 of the charging device 310# 1 and the voltage value of the direct current bus 313 of the charging device 310#2 differ greatly. In this case, the switch module 420 disconnects the connection between the first direct current port 410#1 and the second direct current port 410#2. This helps avoid a security problem caused by a large difference between a voltage value of power transmitted by one of the charging device 310# 1 and the charging device 310#2 to the direct current bus of the other one via the charging connection apparatus 400 and the voltage value of the direct current bus of the other one.

During specific implementation, in some embodiments, the charging connection apparatus 400 may further include a charging connection apparatus controller 430, and the charging connection apparatus controller 430 is connected to the switch module 420. The charging connection apparatus controller 430 may be configured to control the switch module 420 to connect the connection between the first direct current port 410#1 and the second direct current port 410#2 when the voltage difference between the first direct current port 410#1 and the second direct current port 410#2 is less than or equal to the preset voltage difference. Alternatively, the charging connection apparatus controller 430 may be configured to control the switch module 420 to disconnect the connection between the first direct current port 410# 1 and the second direct current port 410#2 when the voltage difference between the first direct current port 410#1 and the second direct current port 410#2 is greater than the preset voltage difference.

It should be noted that, in this embodiment of this application, the charging connection apparatus controller 430 may also be directly referred to as a controller.

Still refer to FIG. 10. In some embodiments, the charging connection apparatus 400 may further include a DC-DC conversion circuit 440.

The DC-DC conversion circuit 440 is connected in series between the first direct current port 410#1 and the switch module 420. The DC-DC conversion circuit 440 may be configured to: perform power conversion on a voltage received by the first direct current port 410#1, and then output a voltage obtained through the conversion to the second direct current port 410#2, or may be configured to: perform power conversion on a voltage received by the second direct current port 410#2, and then output a voltage obtained through the conversion to the first direct current port 410#1. To be specific, in this embodiment of this application, the DC-DC conversion circuit 440 may be a bidirectional DC-DC conversion circuit.

During specific implementation, the charging connection apparatus controller 430 is connected to the DC-DC conversion circuit 440. The charging connection apparatus controller 430 may be configured to:
when the first direct current port 410#1 is connected to a direct current bus of one charging device, and the second direct current port 410#2 is connected to a direct current bus of another charging device, in response to that a voltage difference between the first direct current port 410#1 and the second direct current port 410#2 is greater than a preset voltage difference, send a drive signal to the DC-DC conversion circuit 440, and control the switch module 420 to connect a connection between the first direct current port 410#1 and the second direct current port 410#2.

The drive signal indicates the DC-DC conversion circuit 440 to perform power conversion on the voltage received by the first direct current port 410# 1 and then output a voltage obtained through the conversion to the second direct current port 410#2, so that a difference between an output voltage value obtained through the conversion and a voltage value of the second direct current port 410#2 is less than or equal to the preset voltage difference. Alternatively, the drive signal indicates the DC-DC conversion circuit 440 to perform power conversion on the voltage received by the second direct current port 410#2 and then output a voltage obtained through the conversion to the first direct current port 410#1, so that a difference between an output voltage value obtained through the conversion and a voltage value of the first direct current port 410#1 is less than or equal to the preset voltage difference.

Specifically, still for example, the first direct current port 410#1 is connected to the direct current bus 313 of the charging device 310#1 shown in FIG. 5, and the second direct current port 410#2 is connected to the direct current bus 313 of the charging device 310#2 shown in FIG. 5. A voltage value of the first direct current port 410#1 is a voltage value of the direct current bus 313 of the charging device 310# 1, and a voltage value of the second direct current port 410#2 is a voltage value of the direct current bus 313 of the charging device 310#2. That the voltage difference between the first direct current port 410# 1 and the second direct current port 410#2 is greater than the preset voltage difference may be understood as that the voltage value of the direct current bus 313 of the charging device 310#1 and the voltage value of the direct current bus 313 of the charging device 310#2 differ greatly.

In this case, the charging connection apparatus controller 430 may first send the drive signal to the DC-DC conversion circuit 440, to indicate the DC-DC conversion circuit 440 to perform power conversion on a voltage transmitted by the direct current bus 313 of the charging device 310#1 or the charging device 310#2 and then control the switch module 420 to connect the connection between the first direct current port 410#1 and the second direct current port 410#2.

Further, when the direct current bus 313 of the charging device 310#1 transmits power to the direct current bus 313 of the charging device 310#2 via the charging connection apparatus 400, the first direct current port 410#1 transmits, to the DC-DC conversion circuit 440, the received voltage transmitted by the direct current bus 313 of the charging device 310#1. The DC-DC conversion circuit 440 may perform, based on the drive signal, boost conversion and/or buck conversion on the voltage transmitted by the direct current bus 313 of the charging device 310#1, so that the difference between a voltage value output through the conversion and the voltage value of the second direct current port 410#2, that is, the direct current bus 313 of the charging device 310#2 is less than or equal to the preset voltage difference. Therefore, a voltage value transmitted to the direct current bus 313 of the charging device 310#2 via the charging connection apparatus 400 by the direct current bus 313 of the charging device 310#1 may be basically consistent with the voltage value of the direct current bus 313 of the charging device 310#2.

Similarly, when the direct current bus 313 of the charging device 310#2 transmits power to the direct current bus 313 of the charging device 310#1 via the charging connection apparatus 400, the DC-DC conversion circuit 440 may perform, based on the drive signal, boost conversion and/or buck conversion on a voltage that is received by the second direct current port 410#2 and that is from the direct current bus 313 of the charging device 310#2, so that the difference between a voltage value output through the conversion and the voltage value of the first direct current port 410#1, that is, the direct current bus 313 of the charging device 310#1 is less than or equal to the preset voltage difference. Therefore, a voltage value transmitted to the direct current bus 313 of the charging device 310#1 via the charging connection apparatus 400 by the direct current bus 313 of the charging device 310#2 may be basically consistent with the voltage value of the direct current bus 313 of the charging device 310#1.

It may be understood that the foregoing embodiment is described by using an example in which the DC-DC conversion circuit 440 is connected in series between the first direct current port 410#1 and the switch module 420. In some other embodiments, the DC-DC conversion circuit 440 may alternatively be connected in series between the second direct current port 410#2 and the switch module 420.

In this embodiment of this application, the DC-DC conversion circuit 440 is disposed between the first direct current port 410#1 and the second direct current port 410#2 of the charging connection apparatus 400, so that a voltage value transmitted between the first direct current port 410# 1 and the second direct current port 410#2 can be adjusted. Further, when power transmission between direct current buses of two charging devices is performed through the first direct current port 410#1 and the second direct current port 410#2 that are connected to each other, if voltage values of the direct current buses of the two charging devices differ greatly, the DC-DC conversion circuit 440 may perform power conversion on a voltage transmitted by the direct current bus of one charging device, and then transmit a voltage obtained through the conversion to the direct current bus of the other charging device, so that a transmitted voltage value obtained through the conversion is basically consistent with a voltage value of the direct current bus of the other charging device. This helps ensure normal operation and security of power transmission between the direct current buses of the two charging devices via the charging connection apparatus 400.

Further, still refer to FIG. 10. In some embodiments, to obtain the voltage values of the first direct current port 410#1 and the second direct current port 410#2, the charging connection apparatus 400 may further include a voltage detection circuit 450. The voltage detection circuit 450 is configured to detect a voltage value of each direct current port 410. During specific implementation, the charging connection apparatus controller 430 may be connected to the voltage detection circuit 450. The charging connection apparatus controller 430 may be configured to:
when the first direct current port 410#1 is connected to a direct current bus of one charging device, and the second direct current port 410#2 is connected to a direct current bus of another charging device, control the voltage detection circuit to detect the voltage values of the first direct current port 410#1 and the second direct current port 410#2; and
determine a voltage difference between the first direct current port 410#1 and the second direct current port 410#2 based on the voltage values that are of the first direct current port 410#1 and the second direct current port 410#2 and that are detected by the voltage detection circuit 450, that is, determine a difference between direct current buses of charging devices respectively connected to the first direct current port 410#1 and the second direct current port 410#2.

In this embodiment of this application, the voltage value of each direct current port 410 of the charging connection apparatus 400 can be detected by the voltage detection circuit 450. Further, in an actual application, the voltage difference between the first direct current port 410#1 and the second direct current port 410#2 may be determined based on voltage values detected by the voltage detection circuit 450, that is, the difference between the direct current buses of the charging devices respectively connected to the first direct current port 410#1 and the second direct current port 410#2 may be determined. In addition, when the charging connection apparatus 400 operates, the voltage value of each direct current port 410 may be detected in real time by the voltage detection circuit 450. Therefore, when the voltage detection circuit 450 detects that a voltage value of a direct current port 410 is abnormal, for example, the voltage value of the direct current port 410 is excessively high or low, the switch module 420 may be controlled to disconnect a connection between the direct current port 410 with the abnormal voltage value and another direct current port 410, to implement fault isolation, so as to help ensure normal operation of the another direct current port 410 of the charging connection apparatus 400 and a charging device connected to the another direct current port 410.

The foregoing describes related content of disconnecting or connecting the connection between the first direct current port 410#1 and the second direct current port 410#2 by the switch module 420 in the charging connection apparatus 400. The following further describes others structure included between the first direct current port 410#1 and the second direct current port 410#2 in the charging connection apparatus 400.

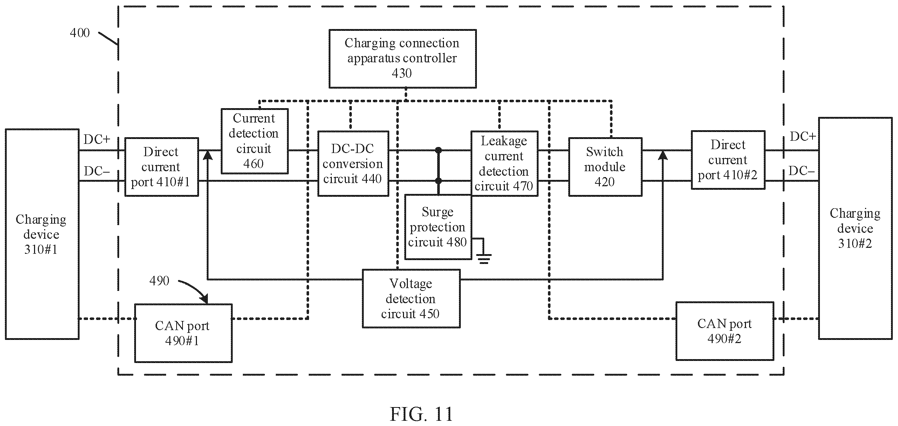

FIG. 11 is a diagram of another structure of the charging connection apparatus 400 according to an embodiment of this application.

It should be understood that the embodiment shown in FIG. 11 includes most technical features of the embodiment shown in FIG. 10. To avoid repetition, the following mainly describes differences between the two embodiments.

Refer to FIG. 11. In some embodiments, the charging connection apparatus 400 may further include a direct current positive wire DC+, a direct current negative wire DC-, and a current detection circuit 460. The first direct current port 410#1 and the second direct current port 410#2 in the charging connection apparatus 400 are connected to each other through the direct current positive wire DC+ and the direct current negative wire DC-. The current detection circuit 460 is connected to the direct current positive wire DC+ or the direct current negative wire DC- between the first direct current port 410#1 and the second direct current port 410#2. For example, as shown in FIG. 11, the current detection circuit 460 is connected to the direct current positive wire DC+ between the first direct current port 410#1 and the second direct current port 410#2. The current detection circuit 460 is configured to detect a current value of a direct current transmitted on the direct current positive wire DC+ or the direct current negative wire DC- between the first direct current port 410#1 and the second direct current port 410#2.

During specific implementation, when the first direct current port 410#1 is connected to a direct current bus of one charging device, and the second direct current port 410#2 is connected to a direct current bus of another charging device, in response to that the current value of the direct current transmitted on the direct current positive wire DC+ or the direct current negative wire DC- between the first direct current port 410#1 and the second direct current port 410#2 is less than or equal to a preset DC current value, the switch module 420 may be configured to disconnect a connection between the first direct current port 410#1 and the second direct current port 410#2.

Specifically, the charging connection apparatus controller 430 may be connected to the current detection circuit 460. The charging connection apparatus controller 430 is configured to: obtain a current value of a direct current detected by the current detection circuit 460, and when the current value of the direct current is less than or equal to the preset DC current value, control the switch module 420 to disconnect the connection between the first direct current port 410#1 and the second direct current port 410#2.

It may be understood that, that the current value of the direct current transmitted on the direct current positive wire DC+ or the direct current negative wire DC- is less than or equal to the preset DC current value may be understood as that a circuit between the direct current buses of the two charging devices respectively connected to the first direct current port 410#1 and the second direct current port 410#2 is disconnected. For example, a short circuit may be caused by an internal fault of any one of the charging devices respectively connected to the first direct current port 410#1 and the second direct current port 410#2. The preset DC current value may be, for example, zero.

In this embodiment of this application, the current detection circuit 460 can detect, in real time, the current value of the direct current transmitted between the first direct current port 410#1 and the second direct current port 410#2 in the charging connection apparatus 400, so that the charging connection apparatus 400 can disconnect the connection between the first direct current port 410#1 and the second direct current port 410#2 when a detected current value is abnormal, to implement fault isolation, so as to ensure normal operation of another direct current port 410 in the charging connection apparatus 400 and a charging device connected to the another direct current port 410.

Still refer to FIG. 11. In some embodiments, the charging connection apparatus 400 may further include a leakage current detection circuit 470. The leakage current detection circuit 470 is connected to the direct current positive wire DC+ and the direct current negative wire DC- that are between the first direct current port 410#1 and the second direct current port 410#2. The leakage current detection circuit 470 is used to detect a current value of a leakage current transmitted on the direct current positive wire DC+ and the direct current negative wire DC- that are between the first direct current port 410#1 and the second direct current port 410#2.

During specific implementation, when the first direct current port 410#1 is connected to a direct current bus of one charging device, and the second direct current port 410#2 is connected to a direct current bus of another charging device, in response to that the current value of the leakage current transmitted on the direct current positive wire DC+ and the direct current negative wire DC- that are between the first direct current port 410# 1 and the second direct current port 410#2 is greater than a preset leakage current value, the switch module 420 may be configured to disconnect a connection between the first direct current port 410#1 and the second direct current port 410#2.

Specifically, the charging connection apparatus controller 430 may be connected to the leakage current detection circuit 470. The charging connection apparatus controller 430 is configured to: obtain a current value of a leakage current detected by the leakage current detection circuit 470, and when the current value of the leakage current is greater than the preset leakage current value, control the switch module 420 to disconnect the connection between the first direct current port 410#1 and the second direct current port 410#2.

It may be understood that the current value of the leakage current may be a vector sum between a positive current value transmitted on the direct current positive wire DC+ and a negative current value transmitted on the direct current negative wire DC-.

In this embodiment of this application, the charging connection apparatus 400 may detect a current value of a leakage current on a transmission line between the first direct current port 410#1 and the second direct current port 410#2 in real time by the leakage current detection circuit 470, and disconnect the connection between the first direct current port 410#1 and the second direct current port 410#2 when the detected current value of the leakage current is greater than the preset leakage current value, to implement earth leakage protection.

Still refer to FIG. 11. In some embodiments, the charging connection apparatus 400 may further include a surge protection circuit 480. One end of the surge protection circuit 480 is connected to the direct current positive wire DC+ and the direct current negative wire DC- that are between the first direct current port 410#1 and the second direct current port 410#2, and the other end of the surge protection circuit 480 is grounded. The surge protection circuit 480 is configured to suppress a surge current/voltage that occurs in a circuit between the first direct current port 410#1 and the second direct current port 410#2.

It may be understood that, when the charging connection apparatus 400 is in a lightning environment, the charging connection apparatus 400 may suffer a lightning strike, and a surge current/voltage may occur in a line between the first direct current port 410#1 and the second direct current port 410#2, that is, a high instantaneous current/voltage occurs. The high instantaneous current/voltage easily damages a component connected to the line between the first direct current port 410#1 and the second direct current port 410#2, thereby affecting normal operation and a service life of the charging connection apparatus 400. Therefore, in this embodiment of this application, the surge protection circuit 480 is disposed between the first direct current port 410#1 and the second direct current port 410#2, to suppress the surge current/voltage that occurs, so as to implement anti-surge lightning protection of the charging connection apparatus 400.

Still refer to FIG. 11. In some embodiments, the charging connection apparatus 400 may further include a plurality of controller area network (controller area network, CAN) ports 490. The charging connection apparatus controller 430 is connected to the plurality of CAN ports 490, the plurality of CAN ports 490 one-to-one correspond to the first direct current port 410#1 and the second direct current port 410#2, and each CAN port 490 is configured to connect to a charging device together with the corresponding first direct current port 410#1 or the corresponding second direct current port 410#2, for example, configured to connect to a CAN port in the charging device. Therefore, the charging connection apparatus controller 430 may communicate with the charging device connected to the first direct current port 410#1 and the charging device connected to the second direct current port 410#2, for example, communicate with a charging device controller in the charging device.

In an example, that the plurality of CAN ports 490 shown in FIG. 11 include a CAN port 490#1 corresponding to the first direct current port 410#1 and a CAN port 490#2 corresponding to the second direct current port 410#2 is used as an example. The charging connection apparatus controller 430 may be configured to:
when the first direct current port 410#1 and the CAN port 490#1 are connected to the charging device 310#1 shown in FIG. 5, and the second direct current port 410#2 and the CAN port 490#2 are connected to the charging device 310#2 shown in FIG. 5, obtain voltage values of the first direct current port 410#1 and the second direct current port 410#2 in response to receiving parallel connection requesting information from the charging device 310#1 and the charging device 310#2; and
determine a voltage difference between the first direct current port 410#1 and the second direct current port 410#2 based on the voltage values of the first direct current port 410#1 and the second direct current port 410#2, that is, determine a voltage difference between the direct current bus 313 of the charging device 310#1 connected to the first direct current port 410#1 and the direct current bus 313 of the charging device 310#2 connected to the second direct current port 410#2.

Specifically, when the CAN port 490#1 is connected to a CAN port in the charging device 310#1, the CAN port 490# 1 and the CAN port in the charging device 310#1 may be mounted to a same CAN bus, therefore, the charging connection apparatus controller 430 establishes a communication connection to a charging device controller in the charging device 310#1 through the CAN bus. Then, in response to detecting that the direct current bus 313 of the charging device 310#1 is connected to the first direct current port 410#1, the charging device controller in the charging device 310#1 sends the parallel connection requesting information to the charging connection apparatus controller 430. Similarly, after establishing a communication connection to the charging connection apparatus controller 430 through a CAN bus, in response to detecting that the direct current bus 313 of the charging device 310#2 is connected to the second direct current port 410#2, a charging device controller in the charging device 310#2 sends the parallel connection requesting information to the charging connection apparatus controller 430.

Further, after receiving the parallel connection requesting information sent by the charging device controllers in the charging device 310#1 and the charging device 310#2, the charging connection apparatus controller 430 may control the voltage detection circuit 450 to detect the voltage values of the first direct current port 410#1 and the second direct current port 410#2. If the voltage difference between the first direct current port 410#1 and the second direct current port 410#2 is less than or equal to the preset voltage difference, the charging connection apparatus controller 430 directly controls the switch module 420 to connect the connection between the first direct current port 410#1 and the second direct current port 410#2. If the voltage difference between the first direct current port 410#1 and the second direct current port 410#2 is greater than the preset voltage difference, after sending the drive signal to the DC-DC conversion circuit 440 connected in series between the first direct current port 410#1 and the second direct current port 410#2, the charging connection apparatus controller 430 may control the switch module 420 to connect the connection between the first direct current port 410#1 and the second direct current port 410#2. Therefore, the direct current bus 313 of the charging device 310#1 and the direct current bus 313 of the charging device 310#2 are interconnected via the charging connection apparatus 400, so that the two direct current buses 313 can invoke power from each other based on an actual requirement.

For specific descriptions of controlling, by the charging connection apparatus controller 430, the switch module 420 to connect the first direct current port 410#1 and the second direct current port 410#2, refer to the foregoing embodiment. Details are not described herein again.

It may be understood that, that the charging connection apparatus controller 430 and the charging device controller in the charging device are in communication connection through the CAN is merely an example, in this embodiment of this application, provided that the charging connection apparatus controller 430 can be in communication connection to the charging devices respectively connected to the first direct current port 410#1 and the second direct current port 410#2, for example, the charging connection apparatus controller 430 may further communicate, in a wireless connection manner, with the charging devices respectively connected to the first direct current port 410#1 and the second direct current port 410#2.

The foregoing describes main structures between any two direct current ports 410 in the charging connection apparatus 400 by using an example in which the plurality of direct current ports 410 in the charging connection apparatus 400 include only the first direct current port 410#1 and the second direct current port 410#2. The following further describes a structure between any two direct current ports 410 in the charging connection apparatus 400 by using an example in which the plurality of direct current ports 410 further include a third direct current port 410#3 and a fourth direct current port 410#4 in addition to the first direct current port 410#1 and the second direct current port 410#2.

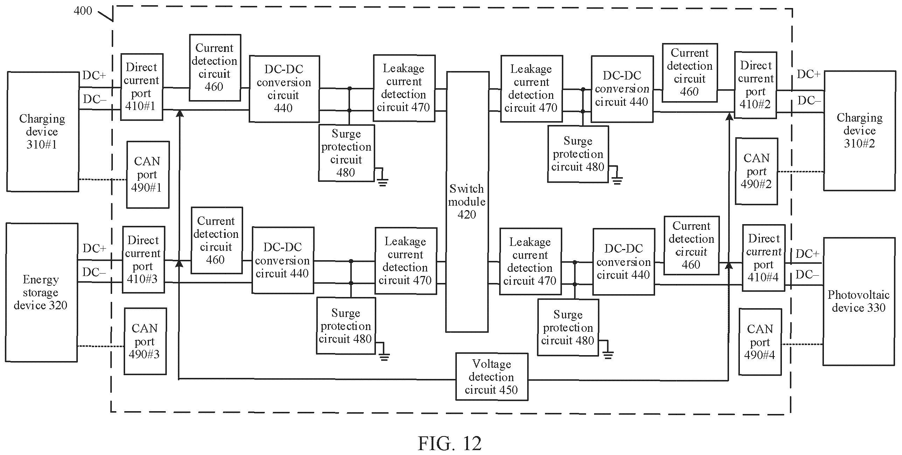

FIG. 12 is a diagram of another structure of the charging connection apparatus 400 according to an embodiment of this application. It should be understood that the embodiment shown in FIG. 12 includes most technical features of the embodiments shown in FIG. 10 and FIG. 11. The following mainly describes differences between the embodiment shown in FIG. 12 and the embodiments shown in FIG. 10 and FIG. 11.

Refer to FIG. 12. In some embodiments, in addition to the first direct current port 410#1 and the second direct current port 410#2, the plurality of direct current ports 410 of the charging connection apparatus 400 further include at least one of a third direct current port 410#3 and a fourth direct current port 410#4. For example, FIG. 12 shows an example in which the plurality of direct current ports 410 further include one third direct current port 410#3 and one fourth direct current port 410#4. Any two direct current ports 410 in the first direct current port 410#1 to the fourth direct current port 410#4 are connected to each other via the switch module 420, in addition, a DC-DC conversion circuit 440 is connected in series between each direct current port 410 in the first direct current port 410# 1 to the fourth direct current port 410#4 and the switch module 420. Further, the DC-DC conversion circuit 440 may perform boost conversion and/or buck conversion on a voltage received by any direct current port 410 in the first direct current port 410#1 to the fourth direct current port 410#4, and then transmit a voltage obtained through the conversion to the other three direct current ports 410.

For example, the first direct current port 410#1 shown in FIG. 12 is connected to the direct current bus 313 of the charging device 310#1 shown in FIG. 6, the second direct current port 410#2 is connected to the direct current bus 313 of the charging device 310#2 shown in FIG. 6, the third direct current port 410#3 is connected to the energy storage device 320 shown in FIG. 6, and the fourth direct current port 410#4 is connected to the photovoltaic device 330 shown in FIG. 6. A voltage value of the first direct current port 410#1 is a voltage value of the direct current bus 313 of the charging device 310#1, and a voltage value of the second direct current port 410#2 is a voltage value of the direct current bus 313 of the charging device 310#2.

It is assumed that the direct current bus 313 of the charging device 310#1 invokes, via the charging connection apparatus 400, power output by the energy storage device 320, the charging connection apparatus controller 430 may first send a drive signal to the DC-DC conversion circuit 440 that is connected in series between the third direct current port 410#3 and the switch module 420, or to the DC-DC conversion circuit 440 that is connected in series between the first direct current port 410#1 and the switch module 420, to indicate the DC-DC conversion circuit 440 to perform power conversion on a voltage transmitted by the energy storage device 320 and then control the switch module 420 to connect a connection between the first direct current port 410#1 and the third direct current port 410#3.

Therefore, when the energy storage device 320 transmits the power to the direct current bus 313 of the charging device 310#1 via the charging connection apparatus 400, the third direct current port 410#3 transmits the received voltage that is output by the energy storage device 320 to the DC-DC conversion circuit 440 that is connected in series between the third direct current port 410#3 and the switch module 420, or to the DC-DC conversion circuit 440 that is connected in series between the first direct current port 410#1 and the switch module 420. Any one of the foregoing DC-DC conversion circuits 440 may perform, based on the drive signal, boost conversion and/or buck conversion on the voltage output by the energy storage device 320, and then output a voltage obtained through the conversion to the direct current bus 313 of the charging device 310#1 through the first direct current port 410# 1. Therefore, a voltage value transmitted to the direct current bus 313 of the charging device 310#1 via the charging connection apparatus 400 by the energy storage device 320 may be basically consistent with a voltage value of the direct current bus 313 of the charging device 310#1.

Similarly, when the photovoltaic device 330 transmits power to the energy storage device 320 via the charging connection apparatus 400, the DC-DC conversion circuit 440 that is connected in series between the fourth direct current port 410#4 and the switch module 420 or the DC-DC conversion circuit 440 that is between the third direct current port 410#3 and the switch module 420 may be used to perform boost conversion and/or buck conversion on a voltage that is output by the photovoltaic device 330 and that is received by the fourth direct current port 410#4, and then output a voltage obtained through the conversion to the energy storage device 320 through the third direct current port 410#3. Therefore, a voltage value transmitted to the energy storage device 320 via the charging connection apparatus 400 by the photovoltaic device 330 can meet a voltage value required for charging the energy storage device 320.

In this embodiment of this application, the DC-DC conversion circuit 440 is disposed between each direct current port 410 in the first direct current port 410#1 to the fourth direct current port 410#4 of the charging connection apparatus 400 and the switch module 420, a voltage value transmitted between any two direct current ports 410 in the first direct current port 410# 1 to the fourth direct current port 410#4 can be adjusted. Further, when the first direct current port 410#1 to the fourth direct current port 410#4 are respectively connected to the energy storage device, the photovoltaic device, and the direct current buses of the charging devices, the DC-DC conversion circuit 440 may perform power conversion on a voltage received by one of the direct current ports 410, and then transmit a voltage obtained through the conversion to another direct current port 410, so that a voltage value, obtained through the conversion, transmitted to the another direct current port 410 is basically consistent with a voltage value of the direct current bus of the charging device connected to the another direct current port 410, or meets a voltage value required for charging the energy storage device connected to the another direct current port 410. This helps ensure normal operation and security of power transmission between the energy storage device, the photovoltaic device, and the direct current buses of the charging devices via the charging connection apparatus 400.

In addition, when the energy storage device and the photovoltaic device are used for charging, the energy storage device and the photovoltaic device need to be connected to DC-DC conversion apparatuses, so that the DC-DC conversion apparatuses perform power conversion on voltages output by the energy storage device and the photovoltaic device, so that voltages obtained through the conversion meet a charging requirement. However, in this embodiment of this application, because the DC-DC conversion circuits 440 in the charging connection apparatus 400 may perform power conversion on the voltages output by the energy storage device and the photovoltaic device, the energy storage device and the photovoltaic device may not need to be separately connected to the DC-DC conversion apparatuses, instead, are directly correspondingly connected to the third direct current port 410#3 and the fourth direct current port 410#4 of the charging connection apparatus 400. This helps reduce costs.

Still refer to FIG. 12. In some embodiments, a current detection circuit 460 is connected to a direct current positive wire DC+ or a direct current negative wire DC- between each direct current port 410 in the first direct current port 410#1 to the fourth direct current port 410#4 of the charging connection apparatus 400 and the switch module 420, so that the current detection circuit 460 can detect a current value of a direct current transmitted on a direct current positive wire DC+ or a direct current negative wire DC- between any two direct current ports 410 in the first direct current port 410#1 to the fourth direct current port 410#4.

Similarly, still refer to FIG. 12. In some embodiments, a leakage current detection circuit 470 is connected to both the direct current positive wire DC+ and the direct current negative wire DC- that are between each direct current port 410 in the first direct current port 410#1 to the fourth direct current port 410#4 of the charging connection apparatus 400 and the switch module 420, so that the leakage current detection circuit 470 can detect a current value of a leakage current transmitted on a direct current positive wire DC+ and a direct current negative wire DC- that are between any two direct current ports 410 in the first direct current port 410# 1 to the fourth direct current port 410#4 of the charging connection apparatus 400.

Still refer to FIG. 12. In some embodiments, a surge protection circuit 480 is connected to both the direct current positive wire DC+ and the direct current negative wire DC- that are between each direct current port 410 in the first direct current port 410# 1 to the fourth direct current port 410#4 of the charging connection apparatus 400 and the switch module 420, so that the surge protection circuit 480 can detect a surge current/voltage occurring in a circuit between any two direct current ports 410 in the first direct current port 410#1 to the fourth direct current port 410#4 of the charging connection apparatus 400, and suppress the surge current/voltage.

It may be understood that specific settings of the DC-DC conversion circuit 440, the current detection circuit 460, the leakage current detection circuit 470, and the surge protection circuit 480 are merely examples, and may be flexibly adjusted based on a change in a total quantity of the first direct current port 410#1 to the fourth direct current port 410#4 in the charging connection apparatus 400, provided that the foregoing circuits are disposed between any two direct current ports 410 in the first direct current port 410#1 to the fourth direct current port 410#4.

Still refer to FIG. 12. In some embodiments, the charging connection apparatus 400 further includes a plurality of CAN ports that one-to-one correspond to the first direct current port 410#1 to the fourth direct current port 410#4. Each CAN port 490 is configured to connect to a charging device, an energy storage device, or a photovoltaic device together with a corresponding direct current port 410, for example, configured to connect to a CAN port in the charging device, a CAN port in the energy storage device, or a CAN port in the photovoltaic device. Therefore, in addition to communicating with different charging devices respectively connected to the first direct current port 410#1 and the second direct current port 410#2, the charging connection apparatus controller 430 may also communicate with the energy storage device connected to the third direct current port 410#3 and/or the photovoltaic device connected to the fourth direct current port 410#4, for example, communicate with an energy storage device controller in the energy storage device and/or a photovoltaic device controller in the photovoltaic device.

In an example, the charging connection apparatus 400 shown in FIG. 12 includes the first direct current port 410#1 to the fourth direct current port 410#4, and four CAN ports 490#1 to 490#4 corresponding to the four direct current ports 410. The charging connection apparatus controller 430 may be configured to:
when the first direct current port 410# 1 is connected to the direct current bus 313 of the charging device 310#1 shown in FIG. 6, the second direct current port 410#2 is connected to the direct current bus 313 of the charging device 310#2 shown in FIG. 6, the third direct current port 410#3 is connected to the energy storage device 320 shown in FIG. 6, and the fourth direct current port 410#3 is connected to the photovoltaic device 330 shown in FIG. 6, obtain voltage values of the first direct current port 410#1 to the fourth direct current port 410#4 in response to receiving parallel connection requesting information sent by the charging device 310#1, the charging device 310#2, the energy storage device 320, and the photovoltaic device 330; and
determine a voltage difference between any two direct current ports 410 in the first direct current port 410#1 to the fourth direct current port 410#4 based on the voltage values of the first direct current port 410#1 to the fourth direct current port 410#4.

Specifically, when the CAN port 490#1 is connected to a CAN port in the charging device 310# 1, the charging connection apparatus controller 430 establishes a communication connection to a charging device controller in the charging device 310#1 through a CAN bus. Then, in response to detecting that the direct current bus 313 of the charging device 310#1 is connected to the first direct current port 410#1, the charging device controller in the charging device 310#1 sends the parallel connection requesting information to the charging connection apparatus controller 430. Similarly, after separately establishing communication with the charging connection apparatus controller 430 through CAN buses, in response to detecting that the corresponding direct current ports 410 are connected to each other, the charging device controller in the charging device 310#2, the energy storage device controller in the energy storage device 320, and the photovoltaic device controller in the photovoltaic device 330 send the parallel connection requesting information to the charging connection apparatus controller 430.

Further, after receiving the parallel connection requesting information sent by the charging device controller in the charging device 310#1, the charging device controller in the charging device 310#2, the energy storage device controller, and the photovoltaic device controller, the charging connection apparatus controller 430 may control the voltage detection circuit 440 to detect the voltage values of the first direct current port 410#1 to the fourth direct current port 410#4, and control, based on the voltage difference between any two direct current ports 410 in the first direct current port 410#1 to the fourth direct current port 410#4, the switch module 420 to connect a connection between any two of the four direct current ports 410. Therefore, the direct current bus 313 of the charging device 310#1, the direct current bus 313 of the charging device 310#2, the energy storage device 320, and the photovoltaic device 330 are interconnected via the charging connection apparatus 400, so that the foregoing devices can invoke power from each other device based on an actual requirement.

For parts that are not described in detail above, refer to the related descriptions of the embodiments shown in FIG. 10 and FIG. 11. Details are not described herein again.

The foregoing describes the structures of the charging connection apparatus 400 provided in embodiments of this application with reference to the accompanying drawings. The following describes a specific topology structure of the switch module 420 in the charging connection apparatus 400 by using examples.

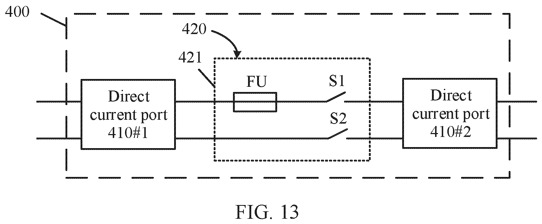

FIG. 13 is a schematic of an example of the specific topology structure of the switch module 420 according to an embodiment of this application.

Refer to FIG. 13. In some embodiments, for example, the charging connection apparatus 400 includes the first direct current port 410#1 and the second direct current port 410#2. The switch module 420 may include a first switch unit 421. The first switch unit 421 includes a switch S1 and a switch S2, and the switch S1 and the switch S2 are respectively connected to the direct current positive wire DC+ and the direct current negative wire DC- that are between the direct current port 410#1 and the direct current port 410#2. Therefore, the connection between the first direct current port 410#1 and the second direct current port 410#2 may be connected by turning on the switch S1 and the switch S2. The connection between the first direct current port 410#1 and the second direct current port 410#2 may be disconnected by turning off the switch S1 and the switch S2.

In an example, to perform short-circuit protection on a line between the first direct current port 410#1 and the second direct current port 410#2, the first switch unit 421 further includes a fuse FU. The fuse FU may be connected to the direct current positive wire DC+ or the direct current negative wire DC- between the first direct current port 410#1 and the second direct current port 410#2, or may be connected to both the direct current positive wire DC+ and the direct current negative wire DC-.

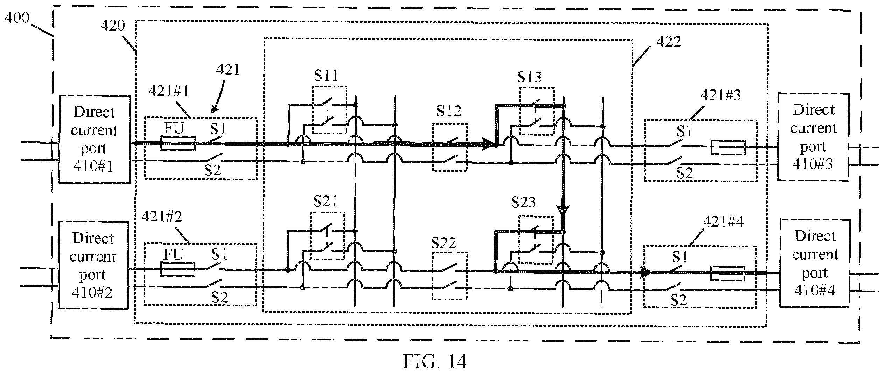

FIG. 14 is a schematic of another example of the specific topology structure of the switch module 420 according to an embodiment of this application.

Refer to FIG. 14. In some embodiments, for example, the charging connection apparatus 400 includes the first direct current port 410#1, the second direct current port 410#2, the third direct current port 410#3, and the fourth direct current port 410#4. Different from the example shown in FIG. 13 in which the switch module 420 only needs to be configured to disconnect or connect the connection between the first direct current port 410#1 and the second direct current port 410#2, in the example shown in FIG. 14, the switch module 420 needs to be configured to disconnect or connect a connection between any two direct current ports 410 of the first direct current port 410# 1, the second direct current port 410#2, the third direct current port 410#3, and the fourth direct current port 410#4. Therefore, in addition to the first switch unit 421, the switch module 420 further includes a second switch unit 422.

Specifically, the switch module 420 includes four first switch units 421 (namely, first switch units 421#1 to 421#4) and a second switch unit 422. The first direct current port 410#1, the second direct current port 410#2, the third direct current port 410#3, and the fourth direct current port 410#4 each are connected to one end of each of the first switch units 421#1 to 421#4 in a one-to-one correspondence manner. The other ends of any two first switch units 421 are connected to each other via the second switch unit 422.

As shown in FIG. 14, the second switch unit 422 includes switches S11, S12, S13, S21, S22, and S23. The first switch unit 421#1 is connected to the first switch unit 421#2 through the switch S11 and the switch S21, the first switch unit 421#1 is connected to the first switch unit 421#3 through the switch S12, the first switch unit 421#1 is connected to the first switch unit 421#4 through the switches S12, S13, and S23, ..., and the first switch unit 421#3 is connected to the first switch unit 421#4 through the switches S13 and S23.

During specific implementation, for example, the first direct current port 410#1 transmits power to the fourth direct current port 410#4. The first switch unit 421#1 correspondingly connected to the first direct current port 410#1, the switches S11, S12, S13, and S23 in the second switch unit 422, and the first switch unit 421#4 correspondingly connected to the direct current port 410#4 are turned on, to connect a connection between the first direct current port 410#1 and the fourth direct current port 410#4. In this case, power received by the first direct current port 410#1 is transmitted to the fourth direct current port 410#4 sequentially through the first switch unit 421#1, the switches S11, S12, S13, and S23, and the first switch unit 421#4 (as shown by a thick-line arrow in FIG. 14).

It may be understood that a quantity of first switch units 421 in the switch module 420 and a quantity of switches included in the second switch unit 422 shown in FIG. 14 are merely examples, and may be flexibly adjusted based on a total quantity of the first direct current port 410#1, the second direct current port 410#2, the third direct current port 410#3, and the fourth direct current port 410#4 in the charging connection apparatus 400.

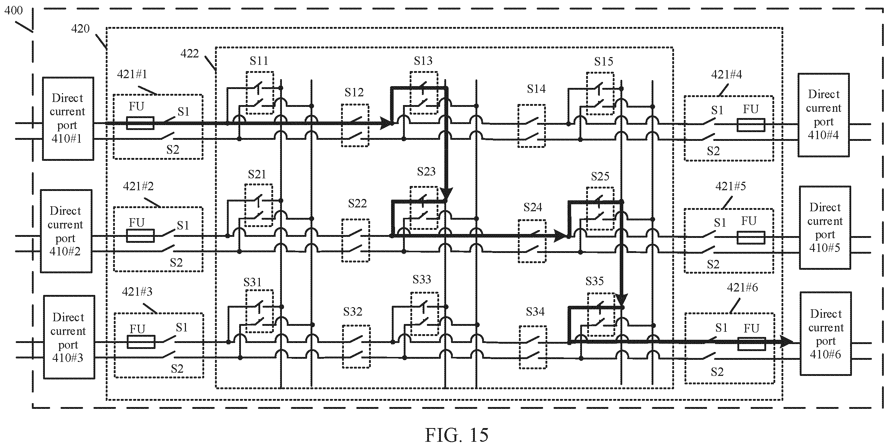

For example, FIG. 15 is a schematic of still another example of the specific topology structure of the switch module 420 according to an embodiment of this application.

Refer to FIG. 15. In some embodiments, in addition to the first direct current port 410#1, the second direct current port 410#2, the third direct current port 410#3, and the fourth direct current port 410#4, the charging connection apparatus 400 further includes a direct current port 410#5 and a direct current port 410#6. The direct current port 410#5 and the direct current port 410#6 each may be configured to connect to a direct current bus of one charging device. In other words, the direct current port 410#5 and the direct current port 410#6 each may be used as either of the first direct current port 410#1 and the second direct current port 410#2. The switch module 420 includes six first switch units 421 (namely, first switch units 421#1 to 421#6) and the second switch unit 422. The first direct current port 410#1 to the fourth direct current port 410#4, the direct current port 410#5, and the direct current ports 410#6 each are connected to one end of each of the first switch units 421#1 to 421#6 in a one-to-one correspondence manner. The other ends of any two first switch units 421 are connected to each other via the second switch unit 422.

As shown in FIG. 15, the second switch unit 422 includes switches S11, S12, S13, ..., and S35. The first switch unit 421#1 is connected to the first switch unit 421#2 through the switch S11 and the switch S21, the first switch unit 421#1 is connected to the first switch unit 421#3 through the switches S11 and S31,... , and the first switch unit 421#5 is connected to the first switch unit 421#6 through the switches S25 and S35.

During specific implementation, for example, the first direct current port 410#1 transmits power to the direct current port 410#6. The first switch unit 421#1 correspondingly connected to the first direct current port 410#1, the switches S12, S13, S23, S24, S25, and S35 in the and the second switch unit 422, and the first switch unit 421#6 correspondingly connected to the direct current port 410#6 are turned on, to connect a connection between the first direct current port 410#1 and the direct current port 410#6, so that the first direct current port 410#1 transmits received power to the direct current port 410#6 sequentially through the first switch units 421#1, S12, S13, S23, S24, S25, S35, and the first switch unit 421#6 (as shown by a thick-line arrow in FIG. 15).

It may be understood that, in this embodiment of this application, the foregoing switch may be, for example, a mechanical switch component (for example, a contactor, a relay, or a circuit breaker), or may be a semiconductor switch component (for example, an IGBT, an MOSFET, or a thyristor), or may be a hybrid switch component used in combination with a mechanical switch component and a semiconductor switch component.

It may be understood that the foregoing specific topology structures of the switch module 420 are merely examples, in embodiments of this application, provided that the topology structure of the switch module 420 can implement disconnection or connection of a connection between any two direct current ports 410 in the charging connection apparatus 400.

The foregoing describes the specific structures of the charging connection apparatus 400 in the charging system 300 provided in embodiments of this application with reference to the accompanying drawings. It should be noted that the foregoing embodiments are described by using an example in which the charging system 300 includes one charging connection apparatus 400. In embodiments of this application, the direct current buses 313 of the plurality of charging devices 310, the energy storage device 320, and/or the photovoltaic device 330 in the charging system 300 are all interconnected via the one charging connection apparatus 400. An overall architecture of the charging system 300 is simple. This facilitates management and control on each device in the charging system 300.

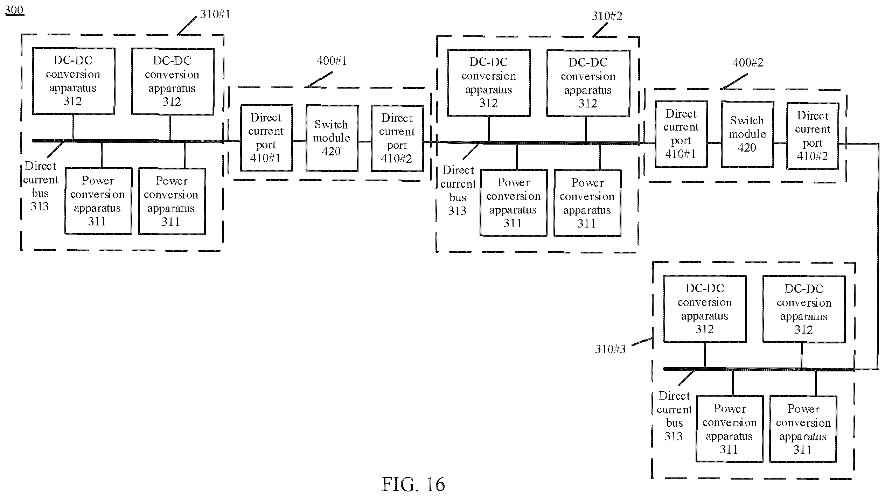

In some other embodiments, based on actual production and design requirements, a charging system 300 may alternatively include a plurality of charging connection apparatuses 400. For example, FIG. 16 is a diagram of an example of a structure of the charging system 300 including the plurality of charging connection apparatuses 400 according to an embodiment of this application.

Refer to FIG. 16. The charging system 300 includes three charging devices 310 and two charging connection apparatuses 400. Each charging connection apparatus 400 includes a first direct current port 410#1 and a second direct current port 410#2. To be specific, the charging system 300 includes charging devices 310#1 to 310#3 and charging connection apparatuses 400#1 and 400#2.

A direct current bus 313 of the charging device 310#1 is connected to a first direct current port 410#1 of the charging connection apparatus 400#1, a second direct current port 410#2 of the charging connection apparatus 400#1 is connected to one end of a direct current bus 313 of the charging device 310#2, the other end of the direct current bus 313 of the charging device 310#2 is connected to a first direct current port 410#1 of the charging connection apparatus 400#2, and a second direct current port 410#2 of the charging connection apparatus 400#2 is connected to a direct current bus 313 of the charging device 310#3. Therefore, the direct current buses 313 of the charging device 310#1, the charging device 310#2, and the charging device 310#3 are sequentially interconnected via the charging connection apparatuses 400#1 and 400#2.

In the charging system 300 shown in the foregoing embodiment, the direct current buses 313 of the plurality of charging devices 310 are sequentially interconnected via the plurality of charging connection apparatuses 400, each charging connection apparatus 400 in the charging system 300 only needs to be connected to direct current buses 313 of two charging devices 300, that is, each charging connection apparatus 400 only needs to include the first direct current port 410#1 and the second direct current port 410#2. This helps reduce structural complexity of the charging connection apparatus 400, and facilitates processing and production of the charging connection apparatus 400.

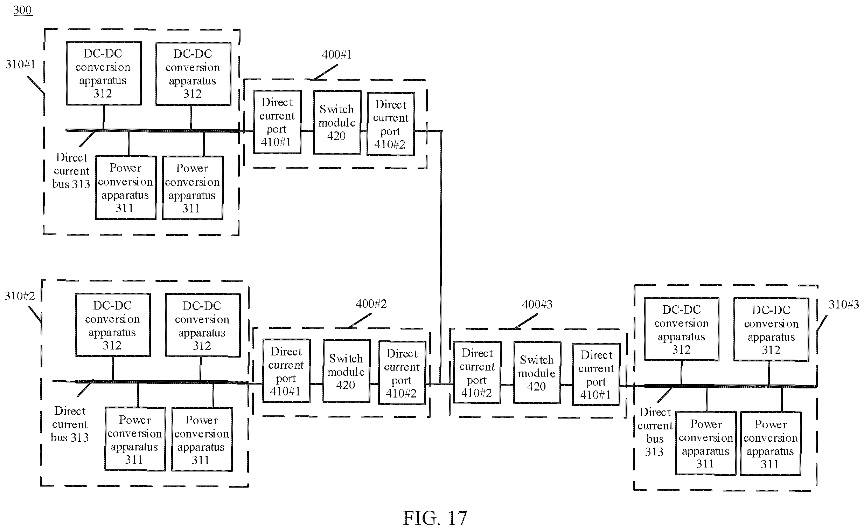

FIG. 17 is a diagram of another example of the structure of the charging system 300 including the plurality of charging connection apparatuses 400 according to an embodiment of this application.

Refer to FIG. 17. The charging system 300 includes three charging devices 310 and three charging connection apparatuses 400. Each charging connection apparatus 400 includes a first direct current port 410#1 and a second direct current port 410#2. To be specific, the charging system 300 includes charging devices 310#1 to 310#3 and charging connection apparatuses 400#1 to 400#3.

Direct current buses 313 of the three charging devices 310 are connected to the first direct current ports 410#1 of the three charging connection apparatuses 400 in a one-to-one correspondence manner. The second direct current ports 410#2 of the three charging connection apparatuses 400 are connected to a same node, so that any two charging connection apparatuses 400 are interconnected. Therefore, direct current buses 313 of any two charging devices 310 are interconnected via two charging connection apparatuses 400 respectively connected to the any two charging devices 310.

In the charging system 300 shown in the foregoing embodiment, the direct current buses 313 of the any two charging devices 310 in the plurality of charging devices 310 are interconnected via the two charging connection apparatuses 400 respectively connected to the any two charging devices 310, so that when a charging device 310 other than the any two charging devices 310 or a charging connection apparatus 400 connected to a direct current bus 313 of the charging device 310 is faulty, normal operation of power transmission between the any two charging devices 310 via the two charging connection apparatuses 400 respectively connected to the any two charging devices 310 is not affected. This helps improve stability of operation of the charging system 300. For example, when the charging device 310#3 and/or the charging connection apparatus 400#3 are/is faulty, power transmission between the direct current bus 313 of the charging device 310#1 and the direct current bus 313 of the charging device 310#2 can still be normally performed via the charging connection apparatus 400#1 and the charging connection apparatus 400#2 that are connected to each other.

The structures of the charging system 300 are further described above with reference to the accompanying drawings. It may be understood that, in an actual application, the charging system 300 may further include a system controller. The system controller may be used as a main controller of the charging system 300, and is responsible for scheduling power transmission between the plurality of charging devices 310, an energy storage device 320, and/or a photovoltaic device 330 in the charging system 300.

In some embodiments, in the charging system 300, the system controller may be separately disposed in any one of the plurality of charging devices 310, the energy storage device 320, and/or the photovoltaic device 330, for example, is separately disposed in the charging connection apparatus 400, or is separately disposed in one charging device 310. In some other embodiments, in the charging system 300, the system controller may also be integrated into a charging connection apparatus controller 430 of the charging connection apparatus 400, or integrated into a charging device controller of any charging device 310. For ease of description and understanding, an example in which the system controller is separately disposed in any charging device 310 is used for description in embodiments of this application.

The following describes a specific example in which the system controller schedules the power transmission between the plurality of charging devices 310, the energy storage device 320, and/or the photovoltaic device 330 in the charging system 300.

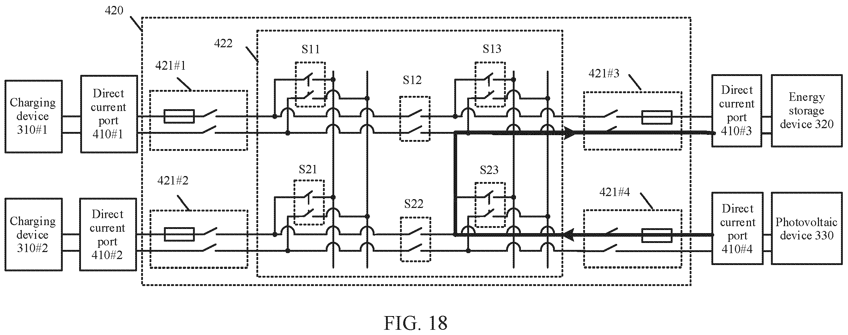

FIG. 18 is a diagram of an example of the structure of the charging system 300 according to an embodiment of this application.

Refer to FIG. 18. The charging system 300 includes two charging devices 310#1 and 310#2, the energy storage device 320, the photovoltaic device 330, and the charging connection apparatus 400. The charging connection apparatus 400 includes the first direct current port 410# 1, the second direct current port 410#2, the third direct current port 410#3, the fourth direct current port 410#4, and the switch module 420. The first direct current port 410#1, the second direct current port 410#2, the third direct current port 410#3, the fourth direct current port 410#4, and the switch module 420 are respectively correspondingly connected to the charging device 310#1, the charging device 310#2, the energy storage device 320, and the photovoltaic device 330.

In some embodiments, the system controller may be configured to:
when both the charging device 310#1 and the charging device 310#2 charge an electric vehicle, in response to that maximum power output by a direct current bus 313 of the charging device 310#1 to a DC-DC conversion apparatus 312 of the charging device 310# 1 is greater than or equal to required output power of the DC-DC conversion apparatus 312 of the charging device 310#1 and maximum power output by a direct current bus 313 of the charging device 310#2 to a DC-DC conversion apparatus 312 of the charging device 310#2 is greater than or equal to required output power of the DC-DC conversion apparatus 312 of the charging device 310#2, control the photovoltaic device 330 to transmit power to the energy storage device 320 via the charging connection apparatus 400.

It may be understood that, that the maximum power output by the direct current bus 313 of the charging device 310#1 to the DC-DC conversion apparatus 312 is greater than or equal to the required output power, for charging the electric vehicle, of the DC-DC conversion apparatus 312 may mean that entire maximum output power of the charging device 310#1 meets entire maximum output power required for charging the electric vehicle, and the charging device 310#1 does not need to invoke power of the energy storage device 320 and the photovoltaic device 330 to charge the electric vehicle. Similarly, the charging device 310#2 does not need to invoke power of the energy storage device 320 and the photovoltaic device 330 to charge the electric vehicle.

In this case, the energy storage device 320 and the photovoltaic device 330 are in an idle state. To increase utilization of the energy storage device 320 and the photovoltaic device 330 in the charging system 300, the system controller may control the photovoltaic device 330 to transmit power to the energy storage device 320 via the charging connection apparatus 400, to charge the energy storage device 320, so that the energy storage device 320 stores as much electric energy as possible. A power transmission path may be shown by a thick-line arrow in FIG. 18.

Further, when entire maximum output power of any charging device 310 in the charging system 300 does not meet the entire maximum output power required for charging the electric vehicle, the system controller may preferentially schedule the power of the energy storage device 320 to be transmitted to a direct current bus 313 of the any charging device 310 via the charging connection apparatus 400. Compared with that power obtained by another charging device 310 from a power grid is scheduled, the power of the energy storage device 320 is preferentially scheduled, so that not only entire maximum output power of the any charging device 310 can be increased, to meet the entire maximum output power required for charging the electric vehicle, but also an amount of electricity received from the power grid can be reduced, to reduce costs of charging the electric vehicle, and relieve pressure on the power grid.

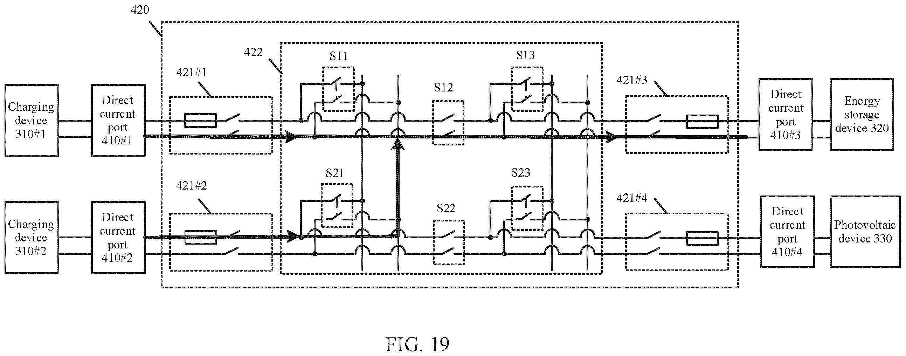

FIG. 19 is a diagram of another example of the structure of the charging system 300 according to an embodiment of this application.

Different from the embodiment shown in FIG. 18, in the embodiment shown in FIG. 19, the system controller may be further configured to:
when neither the charging device 310#1 nor the charging device 310#2 charges the electric vehicle, in response to that a grid electricity price is at a valley electricity price, control the direct current bus 313 of the charging device 310#1 and the charging device 310#2 to transmit power to the energy storage device 320 via the charging connection apparatus 400.

Specifically, when an electricity price of the power grid at night is at the lower valley electricity price, the system controller may control all charging devices 310 in a no-load state in the charging system 300 to receive valley electricity from the power grid, and transmit, via the charging connection apparatus 400, the valley electricity to the energy storage device 320 after performing power conversion on the valley electricity, so that the energy storage device 320 stores as much electric energy as possible. A power transmission path may be shown by a thick-line arrow in FIG. 19.

Therefore, when any charging device 310 in the charging system 300 needs to charge an electric vehicle in daytime, the system controller can preferentially schedule power of the energy storage device 320 to be transmitted to a direct current bus 313 of the any charging device 310 via the charging connection apparatus 400, to reduce peak electricity with a higher electricity price received by the any charging device 310 from the power grid, so as to reduce costs of charging the electric vehicle, and relieve pressure on the power grid.

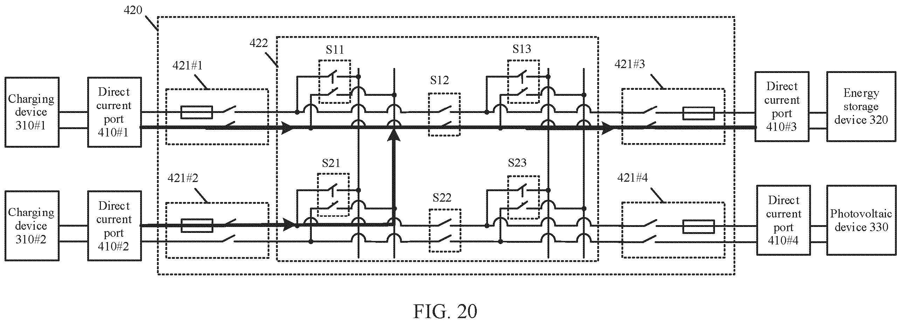

FIG. 20 is a diagram of another example of the structure of the charging system 300 according to an embodiment of this application.

Different from the embodiments shown in FIG. 18 and FIG. 19, in the embodiment shown in FIG. 20, the system controller may be further configured to:
when the charging device 310#1 charges the electric vehicle, in response to that the maximum power output by the direct current bus 313 of the charging device 310#1 to the DC-DC conversion apparatus 312 is less than the required output power of the DC-DC conversion apparatus 312, and the grid electricity price is at the valley electricity price, preferentially control the direct current bus 313 of the charging device 310#2 to transmit power to the direct current bus of the charging device 310#1 via the charging connection apparatus 400.

It may be understood that, that the maximum power output by the direct current bus 313 of the charging device 310#1 to the DC-DC conversion apparatus 312 of the charging device 310#1 is less than the required output power, for charging the electric vehicle, of the DC-DC conversion apparatus 312 of the charging device 310#1 may mean that the entire maximum output power of the charging device 310#1 does not meet the entire maximum output power required for charging the electric vehicle.

In this case, when the grid electricity price is at the valley electricity price, the system controller may preferentially control the charging device 310#2 to receive valley electricity from the power grid, and transmit, via the charging connection apparatus 400, the valley electricity to the direct current bus 313 of the charging device 310#1 after performing power conversion on the valley electricity. A power transmission path may be shown by a thick-line arrow in FIG. 20.

In the foregoing embodiment, when the charging device 310# 1 charges the electric vehicle, in a case in which the grid electricity price is at the valley electricity price, compared with that power of the energy storage device 320 and/or the photovoltaic device 330 connected to the charging connection apparatus 400 is scheduled, the power obtained from the power grid by the charging device 310#2 connected to the charging connection apparatus 400 is preferentially scheduled, so that not only the entire maximum output power of the charging device 310#1 can be increased, to meet the required output power, for charging the electric vehicle, of the DC-DC conversion apparatus 312 of the charging device 310#1, but also use of electric energy stored in the energy storage device 320 can be reduced. Therefore, the energy storage device 320 can provide more electric energy for the plurality of charging devices 310 in the charging system 300 when the grid electricity price is at a peak electricity price, to reduce an amount of peak electricity received by the charging devices 310 from the power grid, and help reduce costs of charging electric vehicles by the plurality of charging devices 310.

Further, in some embodiments, when preferentially controlling the direct current bus 313 of the charging device 310#2 to transmit the power to the charging device 310#1 via the charging connection apparatus 400, the system controller may be further configured to:
in response to that remaining electric energy of the energy storage device 320 is less than preset remaining electric energy, control the direct current bus 313 of the charging device 310#2 to transmit power to the energy storage device 320 via the charging connection apparatus 400.

Specifically, when the grid electricity price is at the valley electricity price, when controlling the charging device 310#2 to transmit the received valley electricity power to the direct current bus 313 of the charging device 310#1 via the charging connection apparatus 400, the system controller may further determine a magnitude of remaining electric energy of the energy storage device 320, and control the charging device 310#2 to transmit the received valley electric power to the energy storage device 320 via the charging connection apparatus 400 when the remaining electric energy of the energy storage device 320 is low, to charge the energy storage device 320, so that the energy storage device 320 can provide more electric energy for the charging device 310#1 and the charging device 310#2 when the grid electricity price is at the peak electricity price, to reduce an amount of peak electricity received by the charging device 310#1 and the charging device 310#2 from the power grid, and help reduce costs of charging electric vehicles by the charging device 310#1 and the charging device 310#2. A power transmission path may be shown by a thick-line arrow in FIG. 20.

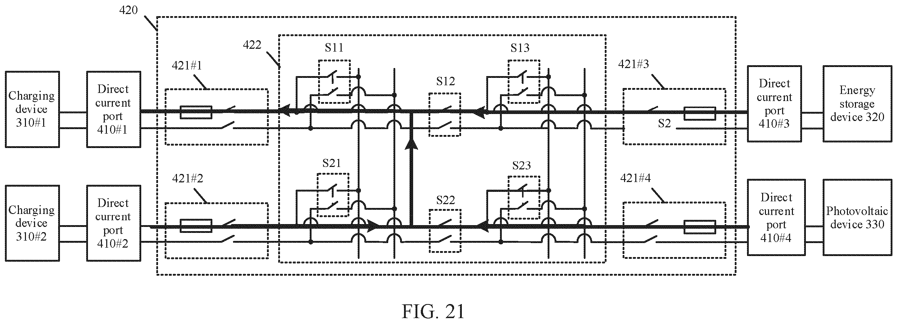

FIG. 20 describes, by using the example in which the grid electricity price is at the valley electricity price, the specific example in which the system controller schedules the power transmission between the charging device 310#1, the charging device 310#2, the energy storage device 320, and the photovoltaic device 330. The following describes, with reference to FIG. 21, a specific example in which the system controller schedules the power transmission between the charging device 310#1, the charging device 310#2, the energy storage device 320, and the photovoltaic device 330 by using an example in which the grid electricity price is not at the valley electricity price.

FIG. 21 is a diagram of another example of the structure of charging system 300 according to an embodiment of this application.

Different from the embodiments shown in FIG. 18 to FIG. 20, in the embodiment shown in FIG. 21, the system controller may be further configured to:
when the charging device 310#1 charges the electric vehicle, in response to that the maximum power output by the direct current bus 313 of the charging device 310# 1 to the DC-DC conversion apparatus 312 of the charging device 310#1 is less than the required output power of the DC-DC conversion apparatus 312 of the charging device 310# 1 and the grid electricity price is not at the valley electricity price, preferentially control at least one of the energy storage device 320 and the photovoltaic device 330 to transmit power to the direct current bus 313 of the charging device 310#1 via the charging connection apparatus 400.

It may be understood that, that the maximum power output by the direct current bus 313 of the charging device 310#1 to the DC-DC conversion apparatus 312 of the charging device 310#1 is less than the required output power, for charging the electric vehicle, of the DC-DC conversion apparatus 312 of the charging device 310#1 may mean that the entire maximum output power of the charging device 310#1 does not meet the entire maximum output power required for charging the electric vehicle.

In this case, when the grid electricity price is not at the valley electricity price, for example, at a normal electricity price or the peak electricity price, an electricity price of electric energy obtained from the power grid is higher. Therefore, the system controller may preferentially control at least one of the energy storage device 320 and the photovoltaic device 330 to transmit the power to the direct current bus 313 of the charging device 310#1 via the charging connection apparatus 400, to increase the entire maximum output power of the charging device 310#1, so as to meet the required output power, for charging the electric vehicle, of the DC-DC conversion apparatus 312 of the charging device 310#1. In addition, peak electricity or normal electricity with the higher electricity price received from the power grid can be reduced, to reduce costs of charging the electric vehicle.

Further, in some embodiments, that the system controller preferentially controls at least one of the energy storage device 320 and the photovoltaic device 330 to transmit power to the direct current bus 313 of the charging device 310#1 via the charging connection apparatus 400 includes:
preferentially controlling at least one of the energy storage device 320 and the photovoltaic device 330 to transmit the power to the direct current bus 313 of the charging device 310#1 via the charging connection apparatus 400; and
in response to that maximum power converged to the direct current bus 313 of the charging device 310#1 is less than the required output power of the DC-DC conversion apparatus 312 of the charging device 310#1, controlling the direct current bus 313 of the charging device 310#2 to transmit power to the direct current bus 313 of the charging device 310#1 via the charging connection apparatus 400.

It may be understood that the maximum power converged to the direct current bus 313 of the charging device 310#1 may be a sum of maximum power output to the direct current bus 313 by the power conversion apparatus 311 of the charging device 310#1 and maximum power converged to the direct current bus 313 by at least one of the energy storage device 320 and the photovoltaic device 330. When the maximum power converged to the direct current bus 313 of the charging device 310#1 is still less than the required output power of the DC-DC conversion apparatus 312 of the charging device 310#1, it indicates that the entire maximum output power of the charging device 310#1 still does not meet the entire maximum output power required for charging the electric vehicle.

In this case, the system controller may further control the direct current bus 313 of the charging device 310#2 to transmit power to the direct current bus 313 of the charging device 310#1 via the charging connection apparatus 400, to increase the entire maximum output power of the charging device 310#1, so as to meet the required output power, for charging the electric vehicle, of the DC-DC conversion apparatus 312 of the charging device 310#1.

The foregoing describes the specific examples in which the system controller schedules the power transmission between the foregoing devices by using an example in which the charging device 310#1, the charging device 310#2, the energy storage device 320, and the photovoltaic device 330 are interconnected via the charging connection apparatus 400, that is, an example in which the switch module 420 connects the connection between any two direct current ports 410 of the first direct current port 410#1, the second direct current port 410#2, the third direct current port 410#3, and the fourth direct current port 410#4.

In some other embodiments, due to an excessively large voltage difference between the direct current bus 313 of the charging device 310# 1 and the direct current bus 313 of the charging device 310#2, the switch module 420 cannot connect a connection between the first direct current port 410#1 connected to the charging device 310#1 and the second direct current port 410#2 connected to the charging device 310#2 cannot be conducted. In this case, the system controller may alternatively control both the energy storage device 320 and the photovoltaic device 330 to transmit power to the direct current bus 313 of the charging device 310#1 and the direct current bus 313 of the charging device 310#2 via the charging connection apparatus 400, so that entire maximum output power of the charging device 310# 1 and the charging device 310#2 can be flexibly adjusted.

It may be understood that, in embodiments of this application, the foregoing controllers may be, for example, any one of a central processing unit (central processing unit, CPU), a network processor (network processor, NP), a digital signal processor (digital signal processor, DSP), a micro controller unit (micro controller unit, MCU), and a programmable logic device (programmable logic device, PLD).

It may be further understood that, in embodiments of this application, the charging connection apparatus controller 430 in the charging connection apparatus 400 may also be directly referred to as a controller.

The foregoing describes the specific examples of power transmission scheduling in the charging system 300. The following describes a structure of another charging system 500 provided in embodiments of this application.

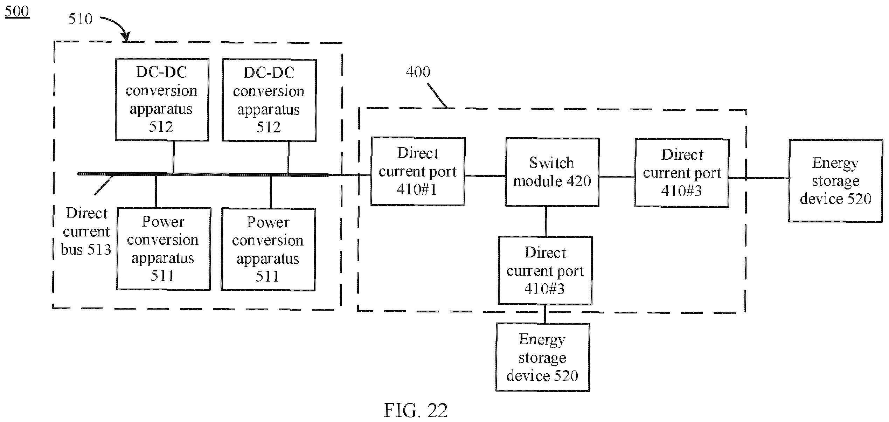

FIG. 22 is a diagram of a structure of the charging system 500 according to an embodiment of this application.

Refer to FIG. 22. The charging system 500 may include a charging device 510, an energy storage device 520, and the charging connection apparatus 400 described in the foregoing embodiments.

The charging device 510 includes a plurality of power conversion apparatuses 511, a plurality of DC-DC conversion apparatuses 512, and a direct current bus 513. The plurality of power conversion apparatuses 511 are configured to: receive an alternating current from an external power grid, convert the alternating current into direct currents, and output then the direct currents to the direct current bus 513. The plurality of DC-DC conversion apparatuses 512 are configured to: receive, through the direct current bus 513, the direct currents output by the plurality of power conversion apparatuses 511, perform power conversion on the received direct currents, and then output direct currents obtained through the conversion to an electric vehicle.

The charging connection apparatus 400 may include a plurality of direct current ports 410 and a switch module 420. The plurality of direct current ports 410 include a first direct current port 410#1 and a third direct current port 410#3, the first direct current port 410#1 is connected to the charging device 510, and the third direct current port 410#3 is connected to the energy storage device 520. The first direct current port 410#1 and the third direct current port 410#3 may be connected to each other via the switch module 420, to perform power transmission between a direct current bus 513 of the charging device 510 and the energy storage device 520. The switch module 420 is configured to disconnect or connect a connection between the first direct current port 410#1 and the third direct current port 410#3.

It may be understood that there may be one or more charging devices 510 and one or more energy storage devices 520 in the charging system 500. For example, FIG. 22 shows that the charging system 500 includes one charging device 510 and two energy storage devices 520. Correspondingly, the charging connection apparatus 400 includes one first direct current port 410#1 and two third direct current ports 410#3.

For specific descriptions of the charging device 510, the energy storage device 520, and the charging connection apparatus 400 in the charging system 500, refer to the related descriptions in the charging system 300. Details are not described herein again.

In this embodiment of this application, the direct current bus 513 of the charging device 510 in the charging system 500 can be interconnected to the energy storage device 520 via the charging connection apparatus 400. Therefore, the direct current bus 513 of the charging device 510 can invoke, via the charging connection apparatus 400, power output by the energy storage device 520, to flexibly adjust entire maximum output power of the charging device 510, so as to meet different requirements of different charging scenarios for the entire maximum output power of the charging device 510. In addition, ESS deployment on a direct current bus side of the charging device 510 can be implemented, to provide richer electric energy for the electric vehicle. In addition, this increases utilization of green resources such as stored energy. In addition, compared with ESS deployment on an alternating current bus side, the ESS deployment on the direct current bus side does not need to perform direct current-alternating current inversion on a direct current output by the energy storage device 520. Therefore, this helps increase energy utilization of the energy storage device 520 and power conversion efficiency of charging the electric vehicle by the charging system 500.

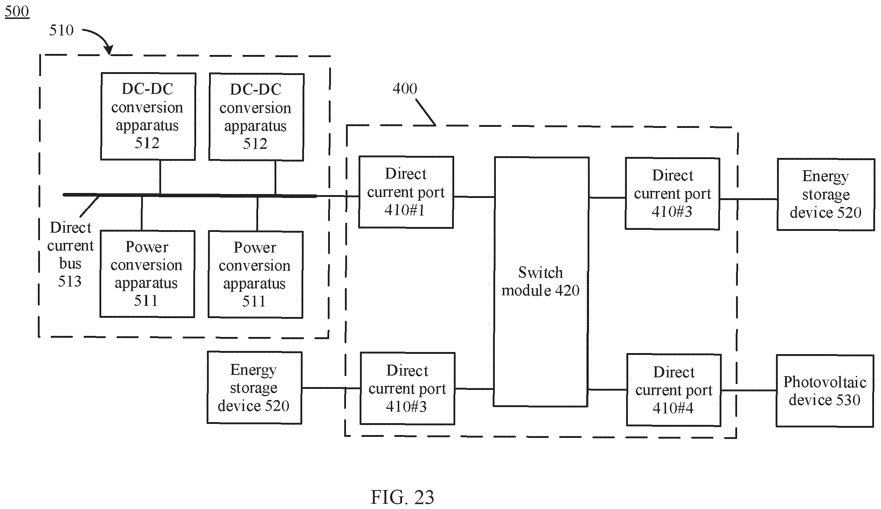

FIG. 23 is a diagram of another structure of the charging system 500 according to an embodiment of this application.

Refer to FIG. 23. In some embodiments, the charging system 500 may further include a photovoltaic device 530, and the plurality of direct current ports further include a fourth direct current port 410#4. The fourth direct current port 410#4 is connected to the photovoltaic device 530, so that power transmission between any two of the direct current bus 513 of the charging device 510, the energy storage device 520, and the photovoltaic device 530 in the charging system 500 can also be performed.

For specific descriptions of performing power transmission between any two of the direct current bus 513 of the charging device 510, the energy storage device 520, and the photovoltaic device 530 in the charging system 500, refer to the related descriptions in the charging system 300. Details are not described herein again.

In this embodiment of this application, any two of the direct current bus of the charging device 510, the energy storage device 520, and the photovoltaic device 530 in the charging system 500 are interconnected via the charging connection apparatus 400. Therefore, the charging device 510 can invoke, via the charging connection apparatus 400, power output by the energy storage device 520 and the photovoltaic device 530. In this way, entire maximum output power of the charging device 510 can be flexibly adjusted, to meet different requirements of different charging scenarios for the entire maximum output power of the charging device 510, and PV and ESS deployment on a direct current bus side of the charging device 510 can be implemented, to provide richer electric energy for the electric vehicle. In addition, this increases utilization of green resources such as light energy and stored energy.

The foregoing describes the structures of the charging system 300 and the charging system 500 provided in embodiments of this application. The following uses the charging system 300 as an example to describe charging methods that are provided in embodiments of this application and that can be applied to the charging system 300.

It should be understood that descriptions of the following method embodiments correspond to the descriptions of the foregoing structure embodiments. Therefore, for content that is not described in detail, refer to the foregoing structure embodiments. Details are not described below.

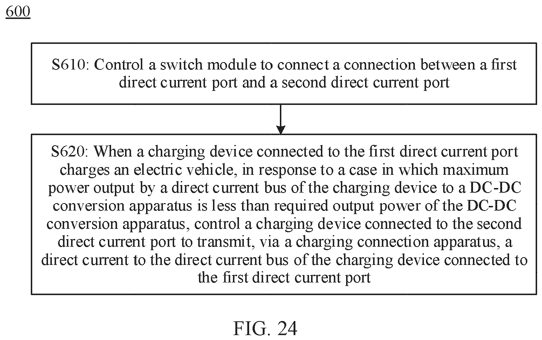

FIG. 24 is a schematic flowchart of a charging method 600 according to an embodiment of this application. The charging method 600 may be applied to the foregoing charging system 300, and may be specifically performed by the system controller in the charging system 300.

With reference to FIG. 5, the charging system 300 includes a plurality of charging devices 310 and a charging connection apparatus 400. Each charging device 310 includes a plurality of power conversion apparatuses 311, a plurality of DC-DC conversion apparatuses 312, and a direct current bus 313. The plurality of power conversion apparatuses 311 are configured to receive an alternating current from an external power grid, convert the alternating current into direct currents, and then output the direct currents to the direct current bus 313. The plurality of DC-DC conversion apparatuses 312 are configured to: receive, through the direct current bus 313, the direct currents output by the plurality of power conversion apparatuses 311, perform power conversion on the received direct currents, and then output direct currents obtained through the conversion to an electric vehicle. The charging connection apparatus 400 may include a plurality of direct current ports 410 and a switch module 420. The plurality of direct current ports 410 include a first direct current port 410#1 and a second direct current port 410#2, the first direct current port 410#1 is connected to a direct current bus 313 of one charging device 310 in the charging system 300, and the second direct current port 410#2 is connected to a direct current bus 313 of another charging device 310 in the charging system 300. For example, the first direct current port 410# 1 is connected to a charging device 310#1, and the second direct current port 410#2 is connected to a charging device 310#2. The switch module 420 is configured to disconnect or connect a connection between the first direct current port 410#1 and the second direct current port 410#2.

Refer to FIG. 24. The charging method 600 may include the following steps.

S610: Control the switch module 420 to connect the connection between the first direct current port 410#1 and the second direct current port 410#2.

During specific implementation, after detecting that the first direct current port 410#1 and the second direct current port 410#2 are respectively connected to the direct current bus 313 of the charging device 310#1 and the direct current bus 313 of the charging device 310#2, the system controller may determine a voltage difference between the first direct current port 410#1 and the second direct current port 410#2, and further control the switch module 420 to connect the connection between the first direct current port 410#1 and the second direct current port 410#2, so that the direct current bus 313 of the charging device 310#1 and the direct current bus 313 of the charging device 310#2 in the charging system 300 are interconnected.

For specific descriptions of interconnecting the direct current bus 313 of the charging device 310#1 and the direct current bus 313 of the charging device 310#2 in the charging system 300, refer to the related descriptions in the charging system 300. Details are not described herein again.

S620: When the charging device 310#1 connected to the first direct current port 410#1 charges the electric vehicle, in response to that maximum power output by the direct current bus 313 of the charging device 310#1 to the DC-DC conversion apparatus 312 of the charging device 310 is less than required output power of the DC-DC conversion apparatus 312 of the charging device 310, control the direct current bus of the another charging device 310 connected to the second direct current port 410#2 to transmit power to the direct current bus 313 of the charging device 310#1 via the charging connection apparatus 400.

It may be understood that, that the maximum power output by the direct current bus 313 of the charging device 310#1 to the DC-DC conversion apparatus 312 of the charging device 310#1 is less than the required output power of the DC-DC conversion apparatus 312 of the charging device 310# 1 may mean that entire maximum output power of the charging device 310#1 does not meet entire maximum output power required for charging the electric vehicle. In this case, the system controller may control the direct current bus 313 of the charging device 310#2 to transmit power to the direct current bus 313 of the charging device 310#1 via the charging connection apparatus 400, to increase power received by the DC-DC conversion apparatus 312 of the charging device 310#1 through the direct current bus 313 of the charging device 310#1, that is, increase the entire maximum output power of the charging device 310#1, so as to meet the required output power, for charging the electric vehicle, of the DC-DC conversion apparatus.

In this embodiment of this application, direct current buses 313 of any two charging devices 310 in the charging system 300 are interconnected via the charging connection apparatus 400, so that when entire maximum output power of any charging device 310 in the charging system 300 does not meet entire maximum output power required for charging the electric vehicle, a direct current bus 313 of another charging device 310 can be controlled to transmit power to a direct current bus 313 of the any charging device 310, to flexibly adjust the entire maximum output power of the any charging device 310, so as to meet the entire maximum output power required for charging the electric vehicle.

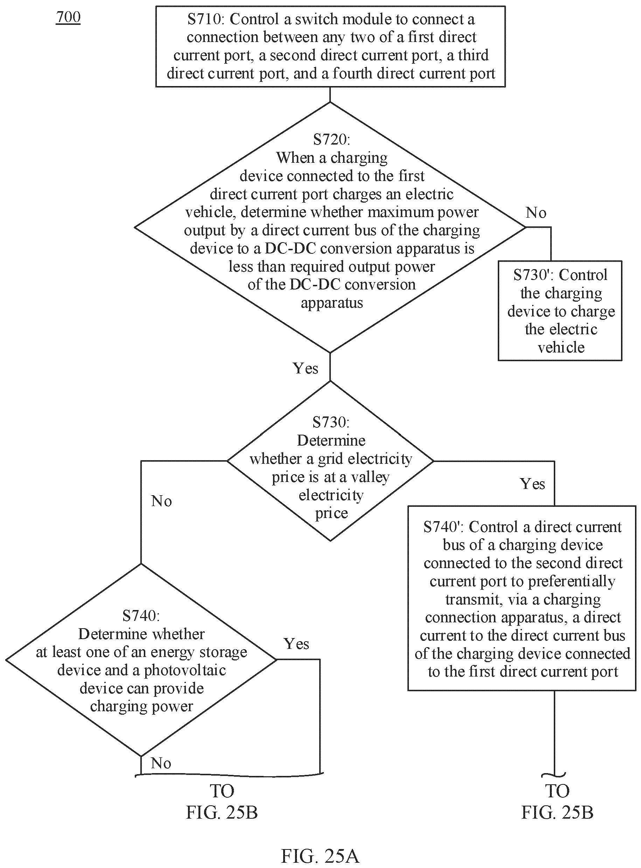

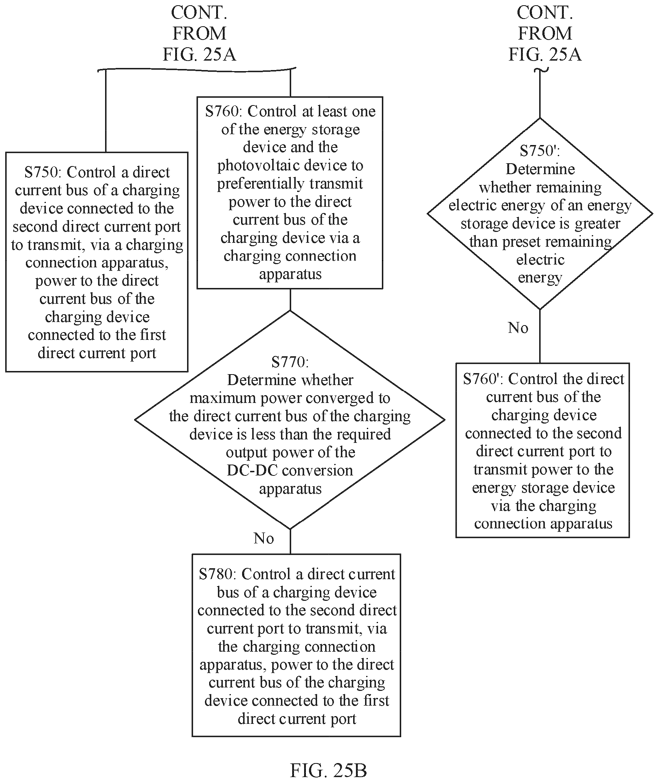

The following further describes in detail a charging method provided in an embodiment of this application with reference to FIG. 25A and FIG. 25B.

FIG. 25A and FIG. 25B are a schematic flowchart of a charging method 700 according to an embodiment of this application. The charging method 700 may be applied to the foregoing charging system 300, and may be specifically performed by the system controller in the charging system 300.

With reference to FIG. 6, in some embodiments, the charging system 300 may further include an energy storage device 320 and/or a photovoltaic device 330. The plurality of direct current ports 410 of the charging connection apparatus 400 may further include at least one of a third direct current port 410#3 and a fourth direct current port 410#4. The third direct current port 410#3 is connected to the energy storage device 320, the fourth direct current port 410#4 is connected to the photovoltaic device 330, and any two direct current ports 410 of the first direct current port 410#1, the second direct current port 410#2, the third direct current port 410#3, and the fourth direct current port 410#4 are connected to each other via the switch module 420.

Refer to FIG. 25A and FIG. 25B. The charging method 700 may include the following steps.

S710: Control the switch module 420 to connect a connection between any two direct current ports 410 of the first direct current port 410#1, the second direct current port 410#2, the third direct current port 410#3, and the fourth direct current port 410#4.

During specific implementation, after detecting that the first direct current port 410# 1 is correspondingly connected to the charging device 310#1, the second direct current port 410#2 is correspondingly connected to the charging device 310#2, the third direct current port 410#3 is correspondingly connected to the energy storage device 320, and the fourth direct current port 410#4 is correspondingly connected to the photovoltaic device 330, the system controller may determine a voltage difference between any two of the four direct current ports 410, and further control the switch module 420 to connect the connection between any two of the four direct current ports 410, so that any two of the direct current bus 313 of the charging device 310#1, the direct current bus 313 of the charging device 310#2, the energy storage device 320, and the photovoltaic device 330 are interconnected.

For specific descriptions of interconnecting any two of the direct current bus 313 of the charging device 310#1, the direct current bus 313 of the charging device 310#2, the energy storage device 320, and the photovoltaic device 330, refer to the related descriptions in the foregoing charging system 300. Details are not described herein again.

For specific descriptions of step S710, refer to the related descriptions of step S610. Details are not described herein again.

S720: When the charging device 310# 1 connected to the first direct current port 410#1 charges an electric vehicle, determine whether maximum power output by the direct current bus 313 of the charging device 310#1 to the DC-DC conversion apparatus 312 of the charging device 310#1 is less than required output power of the DC-DC conversion apparatus 312 of the charging device 310#1.

In a possible case, if the maximum power output by the direct current bus 313 of the charging device 310#1 to the DC-DC conversion apparatus 312 of the charging device 310#1 is greater than or equal to the required output power of the DC-DC conversion apparatus 312 of the charging device 310# 1, it indicates that entire maximum output power of the charging device 310#1 meets entire maximum output power required for charging the electric vehicle. In this case, S730' is performed.

S730': Control the charging device 310# 1 to charge the electric vehicle.

It may be understood that when the entire maximum output power of the charging device 310#1 meets the entire maximum output power required for charging the electric vehicle, the charging device 310 may obtain power only from a power grid to meet a requirement for charging the electric vehicle.

In another possible case, if the maximum power output by the direct current bus 313 of the charging device 310#1 to the DC-DC conversion apparatus 312 of the charging device 310#1 is less than the required output power of the DC-DC conversion apparatus 312 of the charging device 310#1, it indicates that the entire maximum output power of the charging device 310# 1 does not meet the entire maximum output power required for charging the electric vehicle. In this case, S730 is performed.

S730: Determine whether a grid electricity price is at a valley electricity price; and if the grid electricity price is not at the valley electricity price, perform S740 to S780, or if the grid electricity price is at the valley electricity price, perform S740' to S760'.

The following first continues to describe the charging method 700 by using an example in which the grid electricity price is not at the valley electricity price and S740 to S780 are performed.

S740: In response to that the grid electricity price is not at the valley electricity price, determine whether at least one of the energy storage device 320 and the photovoltaic device 330 can provide charging power for the direct current bus 313 of the charging device 310#1. If no, S750 is performed; or if yes, S760 is performed.

Specifically, the system controller may determine, depending on whether remaining electric energy of the energy storage device 320 is greater than preset remaining electric energy, whether the energy storage device 320 can provide charging power. If the remaining electric energy of the energy storage device 320 is greater than or equal to the preset remaining electric energy, it indicates that the energy storage device 320 can provide the charging power; or if the remaining electric energy of the energy storage device 320 is less than the preset remaining electric energy, it indicates that the energy storage device 320 cannot provide the charging power.

In addition, the system controller may determine, depending on whether the photovoltaic device 330 currently is converting light energy into electric energy, whether the photovoltaic device 330 can provide charging power. If the photovoltaic device 330 currently is converting the light energy into the electric energy, it indicates that the photovoltaic device 330 can provide the charging power; or if the photovoltaic device 330 currently is not converting the light energy into the electric energy, it indicates that the photovoltaic device 330 cannot provide the charging power.

Further, when determining that neither the energy storage device 320 nor the photovoltaic device 330 in the charging system 300 can provide charging power, the system controller performs S750; or when determining that the energy storage device 320 and/or the photovoltaic device 330 in the charging system 300 can provide charging power, the system controller performs S760.

S750: In response to that neither the energy storage device 320 nor the photovoltaic device 330 can provide the charging power, control the direct current bus of the charging device 310#2 connected to the second direct current port 410#2 to transmit, via the charging connection apparatus 400, power to the direct current bus 313 of the charging device 310#1 connected to the first direct current port 410#1, to increase the entire maximum output power of the charging device 310#1, so as to meet the required output power, for charging the electric vehicle, of the DC-DC conversion apparatus.

S760: In response to that at least one of the energy storage device 320 and the photovoltaic device 330 can provide the charging power, preferentially control at least one of the energy storage device 320 and the photovoltaic device 330 to transmit power to the direct current bus 313 of the charging device 310#1 via the charging connection apparatus 400.

In this embodiment of this application, when the grid electricity price is not at the valley electricity price, for example, at a normal electricity price or a peak electricity price, an electricity price of electric energy obtained from the power grid is higher. Therefore, the system controller may preferentially control the energy storage device 320 and/or the photovoltaic device 330 to transmit the power to the direct current bus 313 of the charging device 310# 1 via the charging connection apparatus 400, to increase the entire maximum output power of the charging device 310#1, so as to meet the required output power, for charging the electric vehicle, of the charging device 310#1. In addition, peak electricity or normal electricity with the higher electricity price received from the power grid is reduced, to reduce costs of charging the electric vehicle.

When the system controller preferentially controls the energy storage device 320 and/or the photovoltaic device 330 to transmit the power to the direct current bus 313 of the charging device 310#1, the system controller may further perform S770.

S770: Determine whether maximum power converged to the direct current bus 313 of the charging device 310#1 is less than the required output power of the DC-DC conversion apparatus of the charging device 310#1.

It may be understood that the maximum power converged to the direct current bus 313 of the charging device 310#1 may be a sum of maximum power output to the direct current bus 313 by the power conversion apparatus 311 of the charging device 310#1 and maximum power converged to the direct current bus 313 by the energy storage device 320 and/or the photovoltaic device 330.

Therefore, if the maximum power converged to the direct current bus 313 of the charging device 310#1 is greater than or equal to the required output power of the DC-DC conversion apparatus of the charging device 310#1, it indicates that the entire maximum output power of the charging device 310# 1 can meet the entire maximum output power required for charging the electric vehicle. In this case, the energy storage device 320 and/or the photovoltaic device 330 in the charging system 300 are/is controlled to transmit the power to the direct current bus 313 of the charging device 310#1 via the charging connection apparatus 400, and the charging device 310#2 connected to the second direct current port 410#2 may be controlled to be in a shutdown state, to reduce an operating loss of the charging system 300.

If the maximum power converged to the direct current bus 313 of the charging device 310#1 is still less than the required output power of the DC-DC conversion apparatus of the charging device 310# 1, it indicates that the entire maximum output power of the charging device 310#1 still does not meet the entire maximum output power required for charging the electric vehicle. In this case, S780 is performed.

S780: In response to that the maximum power converged to the direct current bus 313 of the charging device 310#1 is less than the required output power of the DC-DC conversion apparatus of the charging device 310#1, control the direct current bus 313 of the charging device 310#2 connected to the second direct current port 410#2 to transmit power to the direct current bus 313 of the charging device 310#1 via the charging connection apparatus 400.

Specifically, when the sum of the maximum power output to the direct current bus 313 by the power conversion apparatus 311 of the charging device 310#1 and the maximum power converged to the direct current bus 313 of the charging device 310#1 by the energy storage device 320 and/or the photovoltaic device 330 controlled by the system controller still cannot meet the entire maximum output power required for charging the electric vehicle, the system controller may further control the direct current bus 313 of the charging device 310#2 connected to the second direct current port 410#2 to transmit the power to the direct current bus 313 of the charging device 310#1, to further improve the entire maximum output power of the charging device 310#1, so as to help meet the entire maximum output power required for charging the electric vehicle.

The following first continues to describe the charging method 700 by using an example in which the grid electricity price is at the valley electricity price and S740' to S760' are performed.

S740': In response to that the grid electricity price is at the valley electricity price, preferentially control the charging device 310#2 connected to the second direct current port 410#2 to transmit a direct current to the direct current bus 313 of the charging device 310# 1 via the charging connection apparatus 400.

In this embodiment of this application, when the grid electricity price is at the valley electricity price, compared with that power of the energy storage device 320 and/or the photovoltaic device 330 is scheduled, power of the charging device 310#2 connected to the second direct current port 410#2 is preferentially adjusted, so that not only the entire maximum output power of the charging device 310#1 can be increased, to meet the entire maximum output power required for charging the electric vehicle, but also use of electric energy stored in the energy storage device 320 can be reduced. Therefore, the energy storage device 320 can provide more electric energy for the plurality of charging devices 310 in the charging system 300 when the grid electricity price is at the peak electricity price, to reduce an amount of peak electricity received by the plurality of charging devices 310 from the power grid, and help reduce costs of charging electric vehicles by the plurality of charging devices 310.

In some embodiments, when the system controller controls the direct current bus 313 of the charging device 310#2 connected to the second direct current port 410#2 to transmit power to the direct current bus 313 of the charging device 310# 1, the system controller may further perform S750'.

S750': Determine whether remaining electric energy of the energy storage device 320 is greater than preset remaining electric energy. If no, S760' continues to be performed.

S760': In response to that the remaining electric energy of the energy storage device 320 is less than the preset remaining electric energy, control the direct current bus 313 of the charging device 310#2 connected to the second direct current port 410#2 to transmit the power to the energy storage device 320.

It may be understood that, when the grid electricity price is at the valley electricity price, the system controller may further determine a magnitude of the remaining electric energy of the energy storage device 320, and control the charging device 310#2 connected to the second direct current port 410#2 to transmit received valley electric power to the energy storage device 320 via the charging connection apparatus 400 when the remaining electric energy of the energy storage device 320 is low, to charge the energy storage device 320, so that the energy storage device 320 can provide more electric energy for the plurality of charging devices 310 in the charging system 300 when the grid electricity price is at the peak electricity price, to reduce an amount of peak electricity received by the plurality of charging devices 310 from the power grid, and help reduce costs of charging the electric vehicles by the plurality of charging devices 310.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging connection apparatus, comprising a plurality of direct current ports and a switch module, wherein the plurality of direct current ports comprise a first direct current port and a second direct current port, the first direct current port is configured to connect to a direct current bus of one charging device, the second direct current port is configured to connect to a direct current bus of another charging device, and the direct current bus of each of the charging devices is configured to converge direct currents output by a plurality of power conversion apparatuses of the charging device;
the first direct current port and the second direct current port are connected to each other via the switch module, to perform power transmission between the direct current bus of the one charging device and the direct current bus of the another charging device; and
the switch module is configured to disconnect or connect a connection between the first direct current port and the second direct current port.

2. The charging connection apparatus according to claim 1, wherein
when the first direct current port is connected to the direct current bus of the one charging device, and the second direct current port is connected to the direct current bus of the another charging device, in response to that a voltage difference between the first direct current port and the second direct current port is less than or equal to a preset voltage difference, the switch module is configured to connect the connection between the first direct current port and the second direct current port; or
in response to that a voltage difference between the first direct current port and the second direct current port is greater than a preset voltage difference, the switch module is configured to disconnect the connection between the first direct current port and the second direct current port.

3. The charging connection apparatus according to claim 2, wherein the charging connection apparatus further comprises a direct current-direct current, DC-DC conversion circuit and a controller, wherein
the DC-DC conversion circuit is connected in series between the first direct current port and the switch module; and
the controller is configured to:
when the first direct current port is connected to the direct current bus of the one charging device, and the second direct current port is connected to the direct current bus of the another charging device, in response to that the voltage difference between the first direct current port and the second direct current port is greater than the preset voltage difference, send a drive signal to the DC-DC conversion circuit, and control the switch module to connect the connection between the first direct current port and the second direct current port, wherein
the drive signal indicates the DC-DC conversion circuit to perform power conversion on a voltage received by the first direct current port and then output a voltage obtained through the conversion to the second direct current port, so that a difference between an output voltage value obtained through the conversion and a voltage value of the second direct current port is less than or equal to the preset voltage difference; or
the drive signal indicates the DC-DC conversion circuit to perform power conversion on a voltage received by the second direct current port and then output a voltage obtained through the conversion to the first direct current port, so that a difference between an output voltage value obtained through the conversion and a voltage value of the first direct current port is less than or equal to the preset voltage difference.

4. The charging connection apparatus according to claim 3, wherein the charging connection apparatus further comprises a voltage detection circuit, wherein
the voltage detection circuit is configured to detect a voltage value of each direct current port; and
the controller is further configured to:
when the first direct current port is connected to the direct current bus of the one charging device, and the second direct current port is connected to the direct current bus of the another charging device, control the voltage detection circuit to detect the voltage values of the first direct current port and the second direct current port; and
determine the voltage difference between the first direct current port and the second direct current port based on the voltage values that are of the first direct current port and the second direct current port that are detected by the voltage detection circuit.

5. The charging connection apparatus according to any one of claims 2 to 4, wherein the charging connection apparatus further comprises a direct current positive wire, a direct current negative wire, and a current detection circuit;
the first direct current port and the second direct current port are connected to each other through the direct current positive wire and the direct current negative wire, and the current detection circuit is connected to the direct current positive wire or the direct current negative wire between the first direct current port and the second direct current port;
the current detection circuit is configured to detect a current value of a direct current transmitted on the direct current positive wire or the direct current negative wire between the first direct current port and the second direct current port; and
when the first direct current port is connected to the direct current bus of the one charging device, and the second direct current port is connected to the direct current bus of the another charging device, in response to that the current value of the direct current is less than or equal to a preset DC current value, the switch module is configured to disconnect the connection between the first direct current port and the second direct current port.

6. The charging connection apparatus according to claim 5, wherein the charging connection apparatus further comprises a leakage current detection circuit;
the leakage current detection circuit is connected to the direct current positive wire and the direct current negative wire that are between the first direct current port and the second direct current port;
the leakage detection circuit is configured to detect a current value of a leakage current transmitted on the direct current positive wire and the direct current negative wire that are between the first direct current port and the second direct current port; and
when the first direct current port is connected to the direct current bus of the one charging device, and the second direct current port is connected to the direct current bus of the another charging device, in response to that the current value of the leakage current is greater than a preset leakage current value, the switch module is configured to disconnect the connection between the first direct current port and the second direct current port.

7. The charging connection apparatus according to any one of claims 1 to 6, wherein the plurality of direct current ports further comprise at least one of a third direct current port and a fourth direct current port, wherein
the third direct current port is configured to connect to an energy storage device, and the fourth direct current port is configured to connect to a photovoltaic device, to perform power transmission between any two of the direct current bus of the one charging device, the direct current bus of the another charging device, the energy storage device, and the photovoltaic device.

8. A charging system, comprising a plurality of charging devices and a charging connection apparatus, wherein each charging device comprises a power conversion apparatus, a direct current bus, and a direct current-direct current DC-DC conversion apparatus, the power conversion apparatus is connected to an input end of the DC-DC conversion apparatus through the direct current bus, and an output end of the DC-DC conversion apparatus is configured to connect to an electric vehicle;
the power conversion apparatus is configured to output a direct current to the direct current bus, and the DC-DC conversion apparatus is configured to: receive the direct current through the direct current bus, perform power conversion on the direct current, and then output a direct current obtained through the conversion to the electric vehicle;
the charging connection apparatus comprises a plurality of direct current ports and a switch module, the plurality of direct current ports comprise a first direct current port and a second direct current port, the first direct current port is connected to a direct current bus of one charging device, the second direct current port is connected to a direct current bus of another charging device, and the first direct current port and the second direct current port are connected to each other via the switch module, to perform power transmission between the direct current bus of the one charging device and the direct current bus of the another charging device; and
the switch module is configured to disconnect or connect a connection between the first direct current port and the second direct current port.

9. The charging system according to claim 8, wherein the charging system further comprises at least one of an energy storage device and a photovoltaic device, and the plurality of direct current ports further comprise at least one of a third direct current port and a fourth direct current port, wherein
the third direct current port is connected to the energy storage device, and the fourth direct current port is connected to the photovoltaic device, to perform power transmission between any two of the direct current bus of the one charging device, the direct current bus of the another charging device, the energy storage device, and the photovoltaic device.

10. The charging system according to claim 9, wherein the charging system further comprises a system controller, and the system controller is configured to:
when the one charging device charges the electric vehicle, in response to that maximum power output by the direct current bus of the one charging device to a DC-DC conversion apparatus of the one charging device is less than required output power of the DC-DC conversion apparatus of the one charging device and a grid electricity price is at a valley electricity price, preferentially control the direct current bus of the another charging device to transmit power to the direct current bus of the one charging device via the charging connection apparatus.

11. The charging system according to claim 10, wherein the system controller is further configured to:
when the charging system comprises the energy storage device, in response to that remaining electric energy of the energy storage device is less than preset remaining electric energy, control the direct current bus of the another charging device to transmit power to the energy storage device via the charging connection apparatus.

12. The charging system according to claim 10 or 11, wherein the system controller is further configured to:
when the one charging device charges the electric vehicle, in response to that the maximum power output by the direct current bus of the one charging device to the DC-DC conversion apparatus of the one charging device is less than the required output power and the grid electricity price is not at the valley electricity price, preferentially control at least one of the energy storage device and the photovoltaic device to transmit power to the direct current bus of the one charging device via the charging connection apparatus.

13. The charging system according to claim 12, wherein that the system controller is further configured to preferentially control at least one of the energy storage device and the photovoltaic device to transmit power to the direct current bus of the one charging device via the charging connection apparatus comprises:
preferentially controlling at least one of the energy storage device and the photovoltaic device to transmit the power to the direct current bus of the one charging device via the charging connection apparatus; and
in response to that maximum power converged to the direct current bus of the one charging device is less than the required output power, controlling the direct current bus of the another charging device to transmit the power to the direct current bus of the one charging device via the charging connection apparatus.

14. A charging system, comprising a charging connection apparatus, a charging device, and an energy storage device, wherein
the charging device comprises a power conversion apparatus, a direct current bus, and a direct current-direct current DC-DC conversion apparatus, the power conversion apparatus is connected to an input end of the DC-DC conversion apparatus through the direct current bus, and an output end of the DC-DC conversion apparatus is configured to connect to an electric vehicle;
the power conversion apparatus is configured to output a direct current to the direct current bus, and the DC-DC conversion apparatus is configured to: receive the direct current through the direct current bus, perform power conversion on the direct current, and then output a direct current obtained through the conversion to the electric vehicle; and
the charging connection apparatus comprises a plurality of direct current ports and a switch module, the plurality of direct current ports comprise a first direct current port and a third direct current port, the first direct current port is connected to a direct current bus of the charging device, the third direct current port is connected to the energy storage device, and the first direct current port and the third direct current port are connected to each other via the switch module, to perform power transmission between the direct current bus of the charging device and the energy storage device.

15. The charging system according to claim 14, wherein the charging system further comprises a photovoltaic device, and the plurality of direct current ports further comprise a fourth direct current port; and
the fourth direct current port is connected to the photovoltaic device, to perform power transmission between any two of the energy storage device, the photovoltaic device, and the direct current bus of the charging device.
